(19) Europäisches Patentamt
European Patent Office
Office européen des brevets

(11) **EP 4 718 127 A2**

(12) **EUROPEAN PATENT APPLICATION**

(43) Date of publication:
**01.04.2026 Bulletin 2026/14**

(21) Application number: **25204495.3**

(22) Date of filing: **25.09.2025**

(51) International Patent Classification (IPC):
**G02B 5/00** *(2006.01)*  **G02B 7/02** *(2021.01)*
**G03B 9/06** *(2021.01)*

(52) Cooperative Patent Classification (CPC):
**G02B 5/005; G03B 9/06;** G02B 7/021

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.09.2024 US 202463699249 P**
**27.08.2025 TW 114132575**

(71) Applicant: **LARGAN PRECISION CO., LTD.**
**Taichung City 408 (TW)**

(72) Inventors:
• **LAI, Yu-Chen**
**408 Taichung City (TW)**
• **TSENG, Te-Sheng**
**408 Taichung City (TW)**

(74) Representative: **Jakelski & Althoff**
**Patentanwälte PartG mbB**
**Patentanwälte**
**Partnerschaftsgesellschaft**
**Mollenbachstraße 37**
**71229 Leonberg (DE)**

(54) **IMAGING LENS ASSEMBLY, CAMERA MODULE AND ELECTRONIC DEVICE**

(57)     An imaging lens assembly includes a plurality of lens elements and an adjustable aperture group. The lens elements are arranged in sequence along an optical axis. The adjustable aperture group is disposed on an object side of the lens elements. The adjustable aperture group includes a plurality of rotatable light blocking sheets, which are arranged around the optical axis and form an adjustable light-through hole. Each of the rotatable light blocking sheets includes an image-side surface and an object-side surface, the image-side surface faces the lens elements, and the object-side surface is disposed opposite to the image-side surface. The image-side surface includes a tapered surface, which is disposed on a side of the image-side surface close to the optical axis, and the tapered surface gradually approaches the object-side surface along a direction close to the optical axis.

Fig. 1A

## Description

## BACKGROUND

Technical Field

The present disclosure relates to an imaging lens assembly, a camera module and an electronic device. More particularly, the present disclosure relates to a compact imaging lens assembly and a compact camera module applicable to a portable electronic device.

Description of Related Art

In recent years, portable electronic devices have developed rapidly. For embodiment, intelligent electronic devices and tablets have been filled in the lives of modern people, and camera modules mounted on the portable electronic devices have also prospered. However, as technology advances, the quality requirements of the electronic devices and the camera modules thereof are becoming higher and higher. Therefore, an imaging lens assembly, a camera module and an electronic device, which are simultaneously featured with compact sizes and the image quality, needs to be developed.

## SUMMARY

According to one aspect of the present disclosure, an imaging lens assembly includes a plurality of lens elements and an adjustable aperture group. The lens elements are arranged in sequence along an optical axis. The adjustable aperture group is disposed on an object side of the lens elements. The adjustable aperture group includes a plurality of rotatable light blocking sheets, which are arranged around the optical axis and form an adjustable light-through hole. Each of the rotatable light blocking sheets includes an image-side surface and an object-side surface, the image-side surface faces the lens elements, and the object-side surface is disposed opposite to the image-side surface. The image-side surface includes a tapered surface, which is disposed on a side of the image-side surface close to the optical axis, and the tapered surface gradually approaches the object-side surface along a direction close to the optical axis.

According to the imaging lens assembly of the foregoing aspect, each of the rotatable light blocking sheets may include, in order from an image side to an object side, a first light blocking layer, a substrate and a second light blocking layer. The first light blocking layer forms the image-side surface. The second light blocking layer forms the object-side surface. A side of the substrate close to the optical axis is located farther away from the optical axis than the first light blocking layer and the second light blocking layer located therefrom.

According to the imaging lens assembly of the foregoing aspect, the first light blocking layer may be located from the side of the substrate close to the optical axis towards the second light blocking layer along the direction close to the optical axis to form the tapered surface.

According to the imaging lens assembly of the foregoing aspect, the image-side surface and the object-side surface of each of the rotatable light blocking sheets may be made of different materials.

According to the imaging lens assembly of the foregoing aspect, the image-side surface and the object-side surface of each of the rotatable light blocking sheets may have different glossiness.

According to the imaging lens assembly of the foregoing aspect, at least one of the rotatable light blocking sheets may further include a coating layer, which is disposed on a side of the at least one of the rotatable light blocking sheets close to the optical axis, and the coating layer forms the tapered surface.

According to the imaging lens assembly of the foregoing aspect, the coating layer may be a light-absorbing coating layer.

According to the imaging lens assembly of the foregoing aspect, the adjustable aperture group may further include an anti-bending sheet, which is coupled to one of the rotatable light blocking sheets and simultaneously rotates therewith. The anti-bending sheet is located farther from the optical axis than the rotatable light blocking sheets located therefrom. In a direction parallel to the optical axis, when a thickness of the anti-bending sheet is defined as S, and a thickness of the one of the rotatable light blocking sheets from the object-side surface to the image-side surface is defined as T, the following condition may be satisfied: $0.23 \leq T/S \leq 0.94$.

According to the imaging lens assembly of the foregoing aspect, the rotatable light blocking sheets may include a first rotatable light blocking sheet and a second rotatable light blocking sheet. The second rotatable light blocking sheet is partially overlapped with the first rotatable light blocking sheet in a direction parallel to the optical axis and located closer to the lens elements than the first rotatable light blocking sheet located thereto. In the direction parallel to the optical axis, when a thickness of the first rotatable light blocking sheet from the object-side surface to the image-side surface is defined as Ti, and a thickness of the second rotatable light blocking sheet from the object-side surface to the image-side surface is defined as Tii, the following condition may be satisfied: $0.23 \leq Ti/Tii \leq 0.95$.

According to the imaging lens assembly of the foregoing aspect, the imaging lens assembly may further include a lens barrel, which surrounds the optical axis, and the lens elements and the adjustable aperture group are disposed at the lens barrel. One of the lens elements is a first lens element, which is located closer to the adjustable aperture group than the other of the lens elements located thereto, and the first lens element is more convex on the object side than the lens barrel thereon.

According to another aspect of the present disclosure, a camera module includes the imaging lens assembly according to the foregoing aspect.

According to another aspect of the present disclosure, an electronic device includes the camera module according to the foregoing aspect.

According to another aspect of the present disclosure, an imaging lens assembly includes a plurality of lens elements and an adjustable aperture group. The lens elements are arranged in sequence along an optical axis. The adjustable aperture group is disposed on an object side of the lens elements. The adjustable aperture group includes a plurality of rotatable light blocking sheets, which are arranged around the optical axis and form an adjustable light-through hole. Each of the rotatable light blocking sheets includes an image-side surface and an object-side surface, the image-side surface faces the lens elements, and the object-side surface is disposed opposite to the image-side surface. The adjustable aperture group further includes an anti-bending sheet, which is coupled to one of the rotatable light blocking sheets, and the anti-bending sheet is located farther from the optical axis than the rotatable light blocking sheets located therefrom.

According to the imaging lens assembly of the foregoing aspect, in a direction parallel to the optical axis, when a thickness of the anti-bending sheet is defined as S, and a thickness of the one of the rotatable light blocking sheets from the object-side surface to the image-side surface is defined as T, the following condition may be satisfied: $0.23 \leq T/S \leq 0.94$.

According to the imaging lens assembly of the foregoing aspect, the anti-bending sheet may include a protrusion structure, which protrudes in a direction away from the one of the rotatable light blocking sheets.

According to the imaging lens assembly of the foregoing aspect, the image-side surface and the object-side surface of each of the rotatable light blocking sheets may be made of different materials.

According to the imaging lens assembly of the foregoing aspect, at least one of the rotatable light blocking sheets may include, in order from an image side to an object side, a first light blocking layer, a substrate and a second light blocking layer. A side of the substrate close to the optical axis is located farther away from the optical axis than the first light blocking layer and the second light blocking layer located therefrom.

According to the imaging lens assembly of the foregoing aspect, at least one of the rotatable light blocking sheets may further include a coating layer, and at least a portion of the coating layer is disposed on the side of the substrate close to the optical axis.

According to another aspect of the present disclosure, an imaging lens assembly includes a plurality of lens elements and an adjustable aperture group. The lens elements are arranged in sequence along an optical axis. The adjustable aperture group is disposed on an object side of the lens elements. The adjustable aperture group includes a plurality of rotatable light blocking sheets, which are arranged around the optical axis and form an adjustable light-through hole. Each of the rotatable light blocking sheets includes an image-side surface and an object-side surface, the image-side surface faces the lens elements, and the object-side surface is disposed opposite to the image-side surface. The rotatable light blocking sheets include a first rotatable light blocking sheet and a second rotatable light blocking sheet. The second rotatable light blocking sheet is partially overlapped with the first rotatable light blocking sheet in a direction parallel to the optical axis and located closer to the lens elements than the first rotatable light blocking sheet located thereto. In the direction parallel to the optical axis, a thickness of the first rotatable light blocking sheet from the object-side surface to the image-side surface is defined as Ti, a thickness of the second rotatable light blocking sheet from the object-side surface to the image-side surface is defined as Tii, and the following condition is satisfied: $0.23 \leq Ti/Tii \leq 0.95$.

According to the imaging lens assembly of the foregoing aspect, the image-side surface and the object-side surface of each of the rotatable light blocking sheets may be made of different materials.

According to the imaging lens assembly of the foregoing aspect, at least one of the rotatable light blocking sheets may include, in order from an image side to an object side, a first light blocking layer, a substrate and a second light blocking layer. A side of the substrate close to the optical axis is located farther away from the optical axis than the first light blocking layer and the second light blocking layer located therefrom.

According to the imaging lens assembly of the foregoing aspect, at least one of the rotatable light blocking sheets may further include a coating layer, and at least a portion of the coating layer is disposed on the side of the substrate close to the optical axis.

According to another aspect of the present disclosure, an imaging lens assembly includes a plurality of lens elements and an adjustable aperture group. The lens elements are arranged in sequence along an optical axis. The adjustable aperture group is disposed on an object side of the lens elements. The adjustable aperture group includes a plurality of rotatable light blocking sheets, which are arranged around the optical axis and form an adjustable light-through hole. Each of the rotatable light blocking sheets includes an image-side surface and an object-side surface, the image-side surface faces the lens elements, and the object-side surface is disposed opposite to the image-side surface. The image-side surface of at least one of the rotatable light blocking sheets includes a tapered surface, which is disposed on a side of the image-side surface close to the optical axis, and the tapered surface gradually approaches the object-side surface along a direction close to the optical axis. On a cross section parallel to the optical axis, the tapered surface is in an arc shape.

According to the imaging lens assembly of the foregoing aspect, the at least one of the rotatable light blocking sheets may include, in order from an image side to an object side, a first light blocking layer, a substrate and a second light blocking layer. The first light blocking layer forms the image-side surface. The second light blocking layer forms the object-side surface. A side of the substrate close to the optical axis is located farther away from the optical axis than the first light blocking layer and the second light blocking layer located therefrom. The first light blocking layer is located from the side of the substrate close to the optical axis towards the second light blocking layer along the direction close to the optical axis to form the tapered surface.

According to the imaging lens assembly of the foregoing aspect, the at least one of the rotatable light blocking sheets may further include a coating layer, which is disposed on a side of the at least one of the rotatable light blocking sheets close to the optical axis, and the coating layer forms the tapered surface.

According to another aspect of the present disclosure, an imaging lens assembly includes a plurality of lens elements and an adjustable aperture group. The lens elements are arranged in sequence along an optical axis. The adjustable aperture group is disposed on an object side of the lens elements. The adjustable aperture group includes a plurality of rotatable light blocking sheets, which are arranged around the optical axis and form an adjustable light-through hole. Each of the rotatable light blocking sheets includes an image-side surface and an object-side surface, the image-side surface faces the lens elements, and the object-side surface is disposed opposite to the image-side surface. On a side of one of the rotatable light blocking sheets close to the optical axis, a thickness of the rotatable light blocking sheet is tapered along a direction close to the optical axis. The one of the rotatable light blocking sheets further includes a coating layer, which is disposed on the side of the rotatable light blocking sheet close to the optical axis, and the coating layer forms a tapered surface.

According to the imaging lens assembly of the foregoing aspect, each of the rotatable light blocking sheets may include, in order from an image side to an object side, a first light blocking layer, a substrate and a second light blocking layer. The first light blocking layer forms the image-side surface. The second light blocking layer forms the object-side surface. A side of the substrate close to the optical axis is located farther away from the optical axis than the first light blocking layer and the second light blocking layer located therefrom.

According to the imaging lens assembly of the foregoing aspect, one of the first light blocking layer and the second light blocking layer may be located from the side of the substrate close to the optical axis towards the other one of the first light blocking layer and the second light blocking layer along the direction close to the optical axis.

According to the imaging lens assembly of the foregoing aspect, the tapered surface may be disposed on the object-side surface.

According to the imaging lens assembly of the foregoing aspect, the image-side surface and the object-side surface of each of the rotatable light blocking sheets may have different glossiness.

According to the imaging lens assembly of the foregoing aspect, the imaging lens assembly may further include a lens barrel, which surrounds the optical axis, and the lens elements and the adjustable aperture group are disposed at the lens barrel. One of the lens elements is a first lens element, which is located closer to the adjustable aperture group than the other of the lens elements located thereto, and the first lens element is more convex on the object side than the lens barrel thereon.

According to another aspect of the present disclosure, a camera module includes the imaging lens assembly according to the foregoing aspect.

According to another aspect of the present disclosure, an electronic device includes the camera module according to the foregoing aspect.

## BRIEF DESCRIPTION OF THE DRAWINGS

The present disclosure can be more fully understood by reading the following detailed description of the embodiment, with reference made to the accompanying drawings as follows:

Fig. 1A is a schematic view of a camera module according to the 1st embodiment of the present disclosure.

Fig. 1B is a three-dimensional view of an imaging lens assembly of the camera module of the 1st embodiment in Fig. 1A.

Fig. 1C is an exploded view of the imaging lens assembly of the camera module of the 1st embodiment in Fig. 1A.

Fig. 1D is a three-dimensional view of one of rotatable light blocking sheets of the 1st example of the 1st embodiment in Fig. 1A.

Fig. 1E is a partially enlarged view of one of the rotatable light blocking sheets of the 1st example of the 1st embodiment in Part 1E of Fig. 1A.

Fig. 1F is a three-dimensional view of one of rotatable light blocking sheets of the 2nd example of the 1st embodiment in Fig. 1A.

Fig. 1G is a partially enlarged view of one of the rotatable light blocking sheets of the 2nd example of the 1st embodiment in Part 1E of Fig. 1A.

Fig. 1H is a three-dimensional view of one of rotatable light blocking sheets of the 3rd example of the 1st embodiment in Fig. 1A.

Fig. 1I is a partially enlarged view of one of the rotatable light blocking sheets of the 3rd example of the 1st embodiment in Part 1E of Fig. 1A.

Fig. 1J is a three-dimensional view of one of rotatable light blocking sheets of the 4th example of the 1st embodiment in Fig. 1A.

Fig. 1K is a partially enlarged view of one of the rotatable light blocking sheets of the 4th example of the 1st embodiment in Part 1E of Fig. 1A.

Fig. 1L is a three-dimensional view of one of rotatable light blocking sheets of the 5th example of the 1st embodiment in Fig. 1A.

Fig. 1M is a partially enlarged view of one of the rotatable light blocking sheets of the 5th example of the 1st embodiment in Part 1E of Fig. 1A.

Fig. 1N is a three-dimensional view of one of rotatable light blocking sheets of the 6th example of the 1st embodiment in Fig. 1A.

Fig. 1O is a partially enlarged view of one of the rotatable light blocking sheets of the 6th example of the 1st embodiment in Part 1E of Fig. 1A.

Fig. 1P is a three-dimensional view of one of rotatable light blocking sheets of the 7th example of the 1st embodiment in Fig. 1A.

Fig. 1Q is a partially enlarged view of one of the rotatable light blocking sheets of the 7th example of the 1st embodiment in Part 1E of Fig. 1A.

Fig. 2A is a schematic view of a camera module according to the 2nd embodiment of the present disclosure.

Fig. 2B is a three-dimensional view of an imaging lens assembly of the camera module of the 2nd embodiment in Fig. 2A.

Fig. 2C is an exploded view of the imaging lens assembly of the camera module of the 2nd embodiment in Fig. 2A.

Fig. 2D is a partial three-dimensional view of an adjustable aperture group of the 1st example of the 2nd embodiment in Fig. 2A.

Fig. 2E is a partially enlarged view of the adjustable aperture group of the 1st example of the 2nd embodiment in Part 2E of Fig. 2A.

Fig. 2F is a partial three-dimensional view of an adjustable aperture group of the 2nd example of the 2nd embodiment in Fig. 2A.

Fig. 2G is a partially enlarged view of the adjustable aperture group of the 2nd example of the 2nd embodiment in Part 2E of Fig. 2A.

Fig. 3A is a schematic view of an electronic device according to the 3rd embodiment of the present disclosure.

Fig. 3B is another schematic view of the electronic device of the 3rd embodiment in Fig. 3A.

Fig. 4 is a schematic view of an electronic device according to the 4th embodiment of the present disclosure.

Fig. 5 is a schematic view of a vehicle instrument according to the 5th embodiment of the present disclosure.

**DETAILED DESCRIPTION**

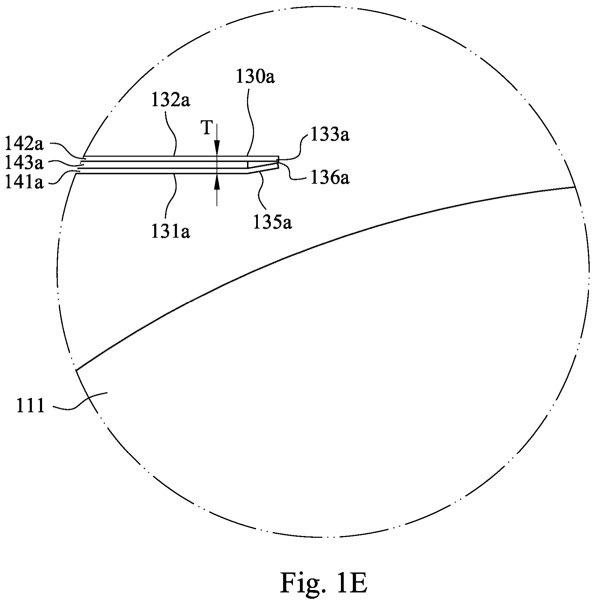

According to one aspect of the present disclosure, an imaging lens assembly includes a plurality of lens elements and an adjustable aperture group. The lens elements are arranged in sequence along an optical axis. The adjustable aperture group is disposed on an object side of the lens elements. The adjustable aperture group includes a plurality of rotatable light blocking sheets, which are arranged around or surround the optical axis and form an adjustable light-through hole. Each of the rotatable light blocking sheets includes an image-side surface and an object-side surface, the image-side surface faces the lens elements, and the object-side surface is disposed opposite to the image-side surface. The image-side surface includes a tapered surface, which is disposed on or disposed adjacent to a side (i.e., an end) of the image-side surface close to the optical axis, and the tapered surface gradually approaches the object-side surface along a direction close to the optical axis (i.e., a direction towards the optical axis), i.e., the tapered surface tapers towards the object side along the direction close to the optical axis. As shown in Fig. 1E, the image-side surface 131a is connected to the inner annular surface 133a at a side close to the optical axis Z1 to form an obtuse angle. The inner annular surface 133a extends from the obtuse angle towards the object-side surface 132a and forms the tapered surface 135a. A portion of the inner annular surface 133a extending from the obtuse angle towards the object-side surface 132a can be considered as a portion of the image-side surface 131a. Therefore, for implementing the camera modules with variable apertures (i.e., variable aperture stops) in small electronic devices such as mobile phones and watches, the apertures can be designed adjacent to the lens surfaces. Furthermore, the contact area during colliding can be increased via the tapered surface, thereby reducing pressure, avoiding damage caused by the light blocking sheet colliding with the lens element, and extending the life of the camera module.

In detail, each of the rotatable light blocking sheets may include, in order from an image side to an object side, a first light blocking layer, a substrate and a second light blocking layer. The first light blocking layer forms the image-side surface. The second light blocking layer forms the object-side surface. A side of the substrate close to the optical axis is located farther away from the optical axis than the first light blocking layer and the second light blocking layer located therefrom. Therefore, the feature of the substrate being farther away from the optical axis than the first light blocking layer and the second light blocking layer located therefrom is beneficial to weaken the hardness of the side of the rotatable light blocking sheet close to the optical axis, thereby reducing the probability of the rotatable light blocking sheet damaging the lens element.

The first light blocking layer may be located from the side of the substrate close to the optical axis towards the second light blocking layer along the direction close to the optical axis to form the tapered surface. Therefore, the edge of the first light blocking layer can be prevented from directly contacting the lens element, thereby reducing the risk of lens damage.

The image-side surface and the object-side surface of each of the rotatable light blocking sheets may be made of different materials. Therefore, via cooperation by different materials, the vibration amplitude of the rotatable light blocking sheets being impacted can be reduced, thereby reducing the risk of the rotatable light blocking sheets colliding with the lens element.

The image-side surface and the object-side surface of each of the rotatable light blocking sheets may have different glossiness. Therefore, it is beneficial to improve the recognition effect and thus improve the assembly efficiency.

At least one of the rotatable light blocking sheets may further include a coating layer, which is disposed on a side of the at least one of the rotatable light blocking sheets close to the optical axis, and the coating layer forms the tapered surface. Therefore, the structure of the adjustable light-through hole can be cushioned for the impact on the lens element so as to avoid the lens element from being damaged.

The coating layer may be a light-absorbing coating layer. Therefore, the coating layer may further have light-absorbing and low-reflective properties to reduce glare. The light-absorbing coating layer may include an absorbent material, such as carbon particles, or a substrate with light-absorbing properties may be used, thereby imparting a light-absorbing effect to the coating layer, but the present disclosure is not limited thereto.

The adjustable aperture group may further include an anti-bending sheet, which is coupled to one of the rotatable light blocking sheets and simultaneously rotates therewith. The anti-bending sheet may be located farther from the optical axis than the rotatable light blocking sheets located therefrom. In a direction parallel to the optical axis, when a thickness of the anti-bending sheet is defined as S, and a thickness of the one of the rotatable light blocking sheets from the object-side surface to the image-side surface is defined as T, the following condition may be satisfied: $0.23 \leq T/S \leq 0.94$. Furthermore, the anti-bending sheet can be a plastic sheet, and the anti-bending sheet can further have one or more bending structures to increase the strength of the anti-bending sheet. The anti-bending sheet can be another light blocking sheet or another rotatable light blocking sheet, and the anti-bending sheet can be coupled with the rotatable light blocking sheet by bonding, electrostatic adsorption, integral molding, etc. Furthermore, the following condition may be satisfied: $0.3 \leq T/S \leq 0.8$. In addition, the following condition may be satisfied: $0.4 \leq T/S \leq 0.7$. Moreover, the following condition may be satisfied: $0.23 \leq T/S \leq 1$.

The rotatable light blocking sheets may include a first rotatable light blocking sheet and a second rotatable light blocking sheet. The second rotatable light blocking sheet is partially overlapped with the first rotatable light blocking sheet in a direction parallel to the optical axis and located closer to the lens elements than the first rotatable light blocking sheet located thereto. In the direction parallel to the optical axis, when a thickness of the first rotatable light blocking sheet from the object-side surface to the image-side surface is defined as Ti, and a thickness of the second rotatable light blocking sheet from the object-side surface to the image-side surface is defined as Tii, the following condition may be satisfied: $0.23 \leq Ti/Tii \leq 0.95$. Therefore, the swing range of the adjustable light-through hole towards the lens elements can be reduced, thereby reducing the risk of the rotatable light blocking sheets colliding with the lens element. Furthermore, the following condition may be satisfied: $0.3 \leq Ti/Tii \leq 0.8$. In addition, the following condition may be satisfied: $0.4 \leq Ti/Tii \leq 0.7$.

The imaging lens assembly may further include a lens barrel surrounding the optical axis, and the lens elements and the adjustable aperture group are disposed at the lens barrel. One of the lens elements is a first lens element, which is located closer to the adjustable aperture group than the other of the lens elements located thereto, and the first lens element is more convex on the object side than the lens barrel thereon. Therefore, it is advantageous in reducing the height and volume of the camera modules with variable apertures.

According to another aspect of the present disclosure, a camera module includes the imaging lens assembly according to the foregoing aspect. Therefore, for implementing the camera modules with variable apertures in small electronic devices such as mobile phones and watches, the apertures can be designed adjacent to the lens surfaces so as to reduce the risk of lens elements being damaged by the apertures.

According to another aspect of the present disclosure, an electronic device includes the camera module according to the foregoing aspect. Therefore, it helps reduce the risk of lens elements being damaged by the aperture in the camera module of the small electronic device.

According to another aspect of the present disclosure, an imaging lens assembly includes a plurality of lens elements and an adjustable aperture group. The lens elements are arranged in sequence along an optical axis. The adjustable aperture group is disposed on an object side of the lens elements. The adjustable aperture group includes a plurality of rotatable light blocking sheets, which are arranged around the optical axis and form an adjustable light-through hole. Each of the rotatable light blocking sheets includes an image-side surface and an object-side surface, the image-side surface faces the lens elements, and the object-side surface is disposed opposite to the image-side surface. The adjustable aperture group further includes an anti-bending sheet, which is coupled to one of the rotatable light blocking sheets, and the anti-bending sheet is located farther from the optical axis than the rotatable light blocking sheets located therefrom. Furthermore, the anti-bending sheet can be a plastic sheet, and the anti-bending sheet can further have one or more bending structures to increase the strength of the anti-bending sheet. The anti-bending sheet can be another light blocking sheet or another rotatable light blocking sheet, and the anti-bending sheet can be coupled with the rotatable light blocking sheet by bonding, electrostatic adsorption, integral molding, etc.

In detail, in a direction parallel to the optical axis, when a thickness of the anti-bending sheet is defined as S, and a thickness of the one of the rotatable light blocking sheets from the object-side surface to the image-side surface is defined as T, the following condition may be satisfied: $0.23 \leq T/S \leq 0.94$. Therefore, it is beneficial to increase the strength of the mutually coupled anti-bending sheet and the rotatable light blocking sheet. Furthermore, the following condition may be satisfied: $0.3 \leq T/S \leq 0.8$. In addition, the following condition may be satisfied: $0.4 \leq T/S \leq 0.7$. Moreover, the following condition may be satisfied: $0.23 \leq T/S \leq 1$.

In the direction parallel to the optical axis, when the thickness of the one of the rotatable light blocking sheets from the object-side surface to the image-side surface is defined as T, the following condition may be satisfied: $0.01 \text{ mm} \leq T \leq 0.12 \text{ mm}$. Therefore, the rotatable light blocking sheet of appropriate thickness is beneficial to provide a better blocking quality. Furthermore, the following condition may be satisfied: $0.015 \text{ mm} \leq T \leq 0.10 \text{ mm}$. In addition, the following condition may be satisfied: $0.02 \text{ mm} \leq T \leq 0.08 \text{ mm}$. Moreover, the following condition may be satisfied: $0.01 \text{ mm} \leq T \leq 0.06 \text{ mm}$.

Furthermore, the following condition may be satisfied: $0.02 \text{ mm} \leq T \leq 0.04 \text{ mm}$.

The anti-bending sheet may include a protrusion structure, which protrudes in a direction away from the one of the rotatable light blocking sheets. Therefore, it is advantageous in reducing the height and volume of the camera modules with the variable aperture.

The image-side surface and the object-side surface of each of the rotatable light blocking sheets may be made of different materials. Therefore, via cooperation by different materials, the vibration amplitude of the rotatable light blocking sheets being impacted can be reduced, thereby reducing the risk of the rotatable light blocking sheets colliding with the lens element.

At least one of the rotatable light blocking sheets may include, in order from an image side to an object side, a first light blocking layer, a substrate and a second light blocking layer. A side of the substrate close to the optical axis is located farther away from the optical axis than the first light blocking layer and the second light blocking layer located therefrom. Therefore, the feature of the substrate being farther away from the optical axis than the first light blocking layer and the second light blocking layer located therefrom is beneficial to weaken the hardness of the side of the rotatable light blocking sheet close to the optical axis, thereby reducing the probability of the rotatable light blocking sheet damaging the lens element.

At least one of the rotatable light blocking sheets further include a coating layer, and at least a portion of the coating layer is disposed on the side of the substrate close to the optical axis. Therefore, the structure of the adjustable light-through hole can be cushioned for the impact on the lens element so as to avoid the lens element from being damaged.

According to another aspect of the present disclosure, an imaging lens assembly includes a plurality of lens elements and an adjustable aperture group. The lens elements are arranged in sequence along an optical axis. The adjustable aperture group is disposed on an object side of the lens elements. The adjustable aperture group includes a plurality of rotatable light blocking sheets, which are arranged around the optical axis and form an adjustable light-through hole. Each of the rotatable light blocking sheets includes an image-side surface and an object-side surface, the image-side surface faces the lens elements, and the object-side surface is disposed opposite to the image-side surface. The rotatable light blocking sheets include a first rotatable light blocking sheet and a second rotatable light blocking sheet. The second rotatable light blocking sheet is partially overlapped with the first rotatable light blocking sheet in a direction parallel to the optical axis and located closer to the lens elements than the first rotatable light blocking sheet located thereto. In the direction parallel to the optical axis, when a thickness of the first rotatable light blocking sheet from the object-side surface to the image-side surface is defined as Ti, and a thickness of the second rotatable light blocking sheet from the object-side surface to the image-side surface is defined as Tii, the following condition is satisfied: $0.23 \leq Ti/Tii \leq 0.95$. Therefore, the swing range of the adjustable light-through hole towards the lens elements can be reduced, thereby reducing the risk of the rotatable light blocking sheets colliding with the lens element. Furthermore, the following condition may be satisfied: $0.3 \leq Ti/Tii \leq 0.8$. In addition, the following condition may be satisfied: $0.4 \leq Ti/Tii \leq 0.7$.

In detail, the image-side surface and the object-side surface of each of the rotatable light blocking sheets may be made of different materials. Therefore, via cooperation by different materials, the vibration amplitude of the rotatable light blocking sheets being impacted can be reduced, thereby reducing the risk of the rotatable light blocking sheets colliding with the lens element.

At least one of the rotatable light blocking sheets may include, in order from an image side to an object side, a first light blocking layer, a substrate and a second light blocking layer. A side of the substrate close to the optical axis is located farther away from the optical axis than the first light blocking layer and the second light blocking layer located therefrom. Therefore, the feature of the substrate being farther away from the optical axis than the first light blocking layer and the second light blocking layer located therefrom is beneficial to weaken the hardness of the side of the rotatable light blocking sheet close to the optical axis, thereby reducing the probability of the rotatable light blocking sheet damaging the lens element.

At least one of the rotatable light blocking sheets may further include a coating layer, and at least a portion of the coating layer is disposed on the side of the substrate close to the optical axis. Therefore, the structure of the adjustable light-through hole can be cushioned for the impact on the lens element so as to avoid the lens element from being damaged.

According to another aspect of the present disclosure, an imaging lens assembly includes a plurality of lens elements and an adjustable aperture group. The lens elements are arranged in sequence along an optical axis. The adjustable aperture group is disposed on an object side of the lens elements. The adjustable aperture group includes a plurality of rotatable light blocking sheets, which are arranged around the optical axis and form an adjustable light-through hole. Each of the rotatable light blocking sheets includes an image-side surface and an object-side surface, the image-side surface faces the lens elements, and the object-side surface is disposed opposite to the image-side surface. The image-side surface of at least one of the rotatable light blocking sheets includes a tapered surface, which is disposed on a side of the image-side surface close to the optical axis, and the tapered surface gradually approaches the object-side surface along a direction close to the optical axis. On a cross section parallel to the optical axis, the tapered surface is in an arc shape. Therefore, it helps maintain the shape of the adjustable light-through hole, thereby improving optical quality.

In detail, at least one of the rotatable light blocking sheets may include, in order from an image side to an object side, a first light blocking layer, a substrate and a second light blocking layer. The first light blocking layer forms the image-side surface. The second light blocking layer forms the object-side surface. A side of the substrate close to the optical axis is located farther away from the optical axis than the first light blocking layer and the second light blocking layer located therefrom. The first light blocking layer is located from the side of the substrate close to the optical axis towards the second light blocking layer along the direction close to the optical axis to form the tapered surface. Therefore, the edge of the first light blocking layer can be prevented from directly contacting the lens element, thereby reducing the risk of lens damage.

The at least one of the rotatable light blocking sheets may further include a coating layer, which is disposed on a side of the at least one of the rotatable light blocking sheets close to the optical axis, and the coating layer forms the tapered surface. Therefore, the structure of the adjustable light-through hole can be cushioned for the impact on the lens element so as to avoid the lens element from being damaged.

According to another aspect of the present disclosure, an imaging lens assembly includes a plurality of lens elements and an adjustable aperture group. The lens elements are arranged in sequence along an optical axis. The adjustable aperture group is disposed on an object side of the lens elements. The adjustable aperture group includes a plurality of rotatable light blocking sheets, which are arranged around the optical axis and form an adjustable light-through hole. Each of the rotatable light blocking sheets includes an image-side surface and an object-side surface, the image-side surface faces the lens elements, and the object-side surface is disposed opposite to the image-side surface. On a side of one (or at least one) of the rotatable light blocking sheets close to the optical axis, a thickness of the rotatable light blocking sheet is tapered along a direction close to the optical axis. The one of the rotatable light blocking sheets further includes a coating layer, which is disposed on the side of the rotatable light blocking sheet close to the optical axis, and the coating layer forms a tapered surface. Therefore, the structure of the adjustable light-through hole can be cushioned for the impact on the lens element so as to avoid the lens element from being damaged.

In detail, each of the rotatable light blocking sheets may include, in order from an image side to an object side, a first light blocking layer, a substrate and a second light blocking layer. The first light blocking layer forms the image-side surface. The second light blocking layer forms the object-side surface. A side of the substrate close to the optical axis is located farther away from the optical axis than the first light blocking layer and the second light blocking layer located therefrom. Therefore, the feature of the substrate being farther away from the optical axis than the first light blocking layer and the second light blocking layer located therefrom is beneficial to weaken the hardness of the side of the rotatable light blocking sheet close to the optical axis, thereby reducing the probability of the rotatable light blocking sheet damaging the lens element.

One of the first light blocking layer and the second light blocking layer may be located from the side of the substrate close to the optical axis towards the other one of the first light blocking layer and the second light blocking layer along the direction close to the optical axis. Therefore, it is advantageous in avoiding damage caused by the light blocking sheet colliding with the lens element and maintaining the light blocking effect.

The tapered surface may be disposed on the object-side surface. Therefore, it is advantageous in avoiding damage caused by the light blocking sheet colliding with the lens element and serving as a recognition feature during assembly.

The image-side surface and the object-side surface of each of the rotatable light blocking sheets may have different glossiness. Therefore, it is beneficial to improve the recognition effect and thus improve the assembly efficiency.

The imaging lens assembly may further include a lens barrel surrounding the optical axis, and the lens elements and the adjustable aperture group are disposed at the lens barrel. One of the lens elements is a first lens element, which is located closer to the adjustable aperture group than the other of the lens elements located thereto, and the first lens element is more convex on the object side than the lens barrel thereon. Therefore, it is advantageous in reducing the height and volume of the camera modules with variable apertures.

According to another aspect of the present disclosure, a camera module includes the imaging lens assembly according to the foregoing aspect. Therefore, for implementing the camera modules with variable apertures in small electronic devices such as mobile phones and watches, the apertures can be designed adjacent to the lens surfaces so as to reduce the risk of lens elements being damaged by the apertures.

According to another aspect of the present disclosure, an electronic device includes the camera module according to the foregoing aspect. Therefore, it helps reduce the risk of lens elements being damaged by the aperture in the camera module of the small electronic device.

<1st Embodiment>

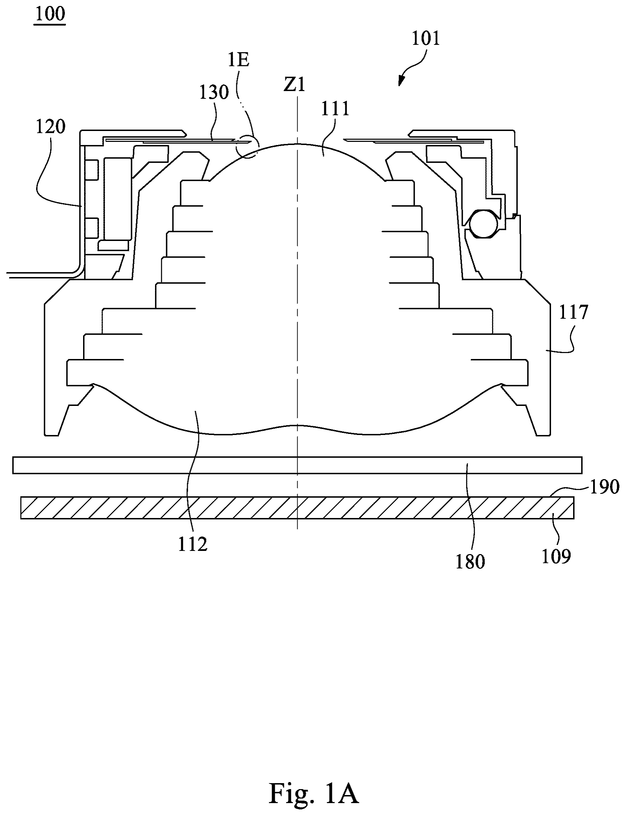

Fig. 1A is a schematic view of a camera module 100 according to the 1st embodiment of the present disclosure. With reference to Fig. 1A, the camera module 100 includes an imaging lens assembly 101 and an image sensor 109. The image sensor 109 is disposed on an image surface 190 of the imaging lens assembly 101. The imaging lens assembly 101 includes a plurality of lens elements (i.e., a first lens element 111 and a plurality of lens elements 112), an adjustable aperture group 120 and a filter 180. The lens elements are arranged in sequence along an optical axis Z1. The adjustable aperture group 120 is disposed on an object side of the lens elements, and the filter 180 is disposed on an image side of the lens elements.

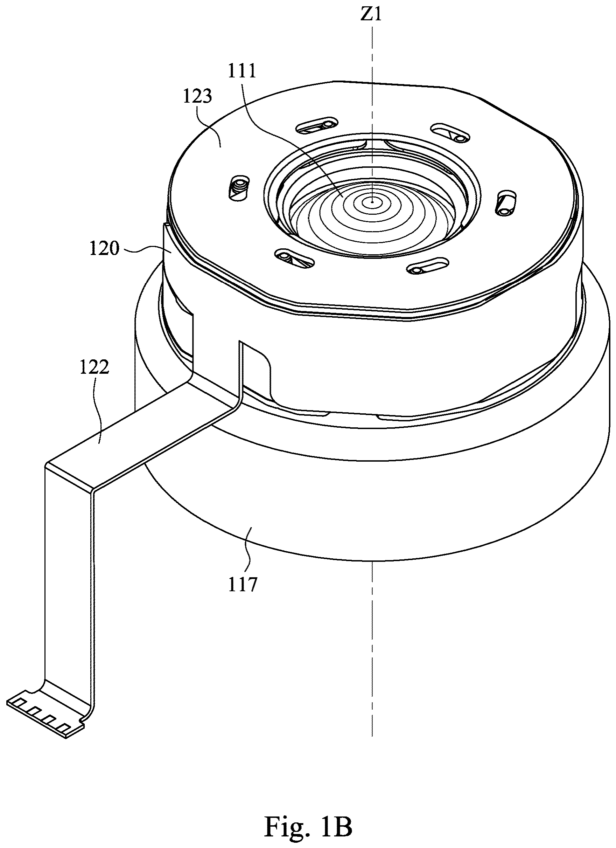

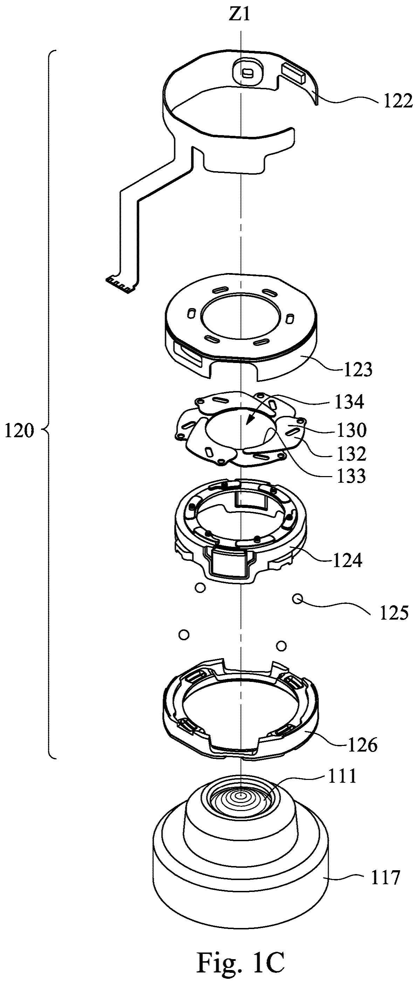

Fig. 1B is a three-dimensional view of the imaging lens assembly 101 of the camera module 100 of the 1st embodiment in Fig. 1A, and Fig. 1C is an exploded view of the imaging lens assembly 101 of the camera module 100 of the 1st embodiment in Fig. 1A. With reference to Fig. 1A to Fig. 1C, the adjustable aperture group 120 includes a plurality of rotatable light blocking sheets 130, which are arranged around the optical axis Z1 and form an adjustable light-through hole 134. Each of the rotatable light blocking sheets 130 includes an image-side surface, an object-side surface 132 and an inner annular surface 133. The image-side surface faces the lens elements, the object-side surface 132 is disposed opposite to the image-side surface, and the inner annular surface 133 connects the image-side surface and the object-side surface 132.

Furthermore, the image-side surface may include a tapered surface (as shown in drawings in the 1st example to the 5th example of the 1st embodiment), which is disposed on a side of the image-side surface close to the optical axis Z1, and the tapered surface gradually approaches the object-side surface along a direction close to the optical axis Z1. Alternatively, a tapered surface (as shown in drawings in the 6th example and 7th example of the 1st embodiment) may be disposed on the object-side surface 132.

The imaging lens assembly 101 further includes a lens barrel 117 surrounding the optical axis Z1. The lens elements and the adjustable aperture group 120 are connected to each other via the lens barrel 117 and disposed on an inner side and an outer side, respectively, of the lens barrel 117. One of the lens elements is the first lens element 111, which is located closer to the adjustable aperture group 120 (closer to the rotatable light blocking sheets 130 thereof, particularly) than the other lens elements 112 located thereto, and the first lens element 111 is more convex on the object side than the lens barrel 117 thereon. Furthermore, the adjustable aperture group 120 further includes a driving circuit 122, fixing portions 123, 126, a rotating portion 124 and rolling elements 125, which are all disposed on a side of the lens barrel 117 close to the object side, so as to further improve focusing quality.

<1st Example of 1st Embodiment>

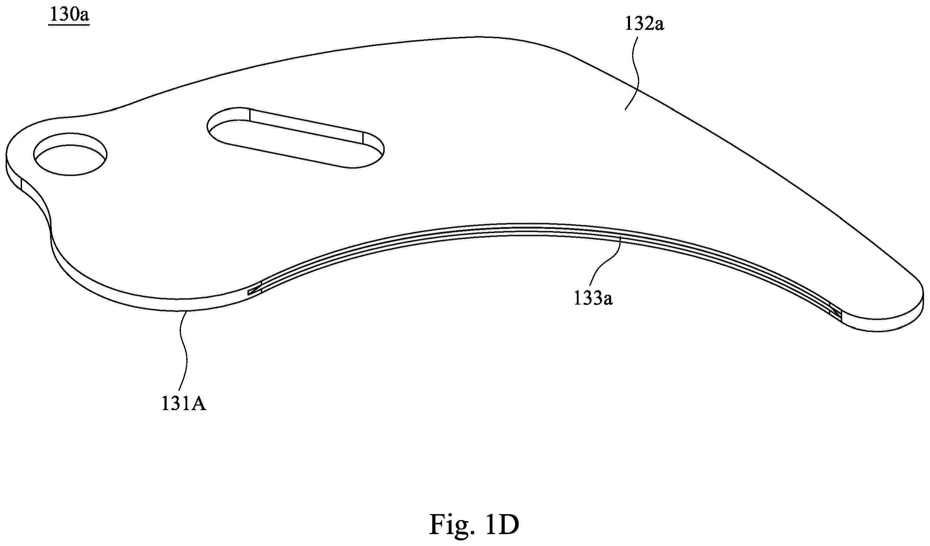

Fig. 1D is a three-dimensional view of one of rotatable light blocking sheets 130a of the 1st example of the 1st embodiment in Fig. 1A. Fig. 1E is a partially enlarged view of one of the rotatable light blocking sheets 130a of the 1st example of the 1st embodiment in Part 1E of Fig. 1A, and the specific shape of the rotatable light blocking sheets 130a in the 1st example of the 1st embodiment is based on Fig. 1E. With reference to Fig. 1A to Fig. 1E, the adjustable aperture group 120 includes a plurality of rotatable light blocking sheets 130a, which are arranged around the optical axis Z1 and form the adjustable light-through hole 134. Each of the rotatable light blocking sheets 130a includes an image-side surface 131a, an object-side surface 132a and an inner annular surface 133a. The image-side surface 131a faces the lens elements, the object-side surface 132a is disposed opposite to the image-side surface 131a, and the inner annular surface 133a connects the image-side surface 131a and the object-side surface 132a.

The right side in Fig. 1E is the side close to the optical axis Z1, and the left side in Fig. 1E is the side away from the optical axis Z1. The image-side surface 131a includes a tapered surface 135a, which is disposed on a side of the image-side surface 131a close to the optical axis Z1, and the tapered surface 135a gradually approaches the object-side surface 132a along a direction close to the optical axis Z1.

Each of the rotatable light blocking sheets 130a includes, in order from an image side to an object side, a first light blocking layer 141a, a substrate 143a and a second light blocking layer 142a. The first light blocking layer 141a forms the image-side surface 131a. The second light blocking layer 142a forms the object-side surface 132a. A side of the substrate 143a close to the optical axis Z1 is located farther away from the optical axis Z1 than the first light blocking layer 141a and the second light blocking layer 142a located therefrom, and the substrate 143a forms a recessed structure 136a. The first light blocking layer 141a is located from the side of the substrate 143a close to the optical axis Z1 towards the second light blocking layer 142a along the direction close to the optical axis Z1 to form the tapered surface 135a.

The image-side surface 131a and the object-side surface 132a of each of the rotatable light blocking sheets 130a may be made of different materials, and the image-side surface 131a and the object-side surface 132a of each of the rotatable light blocking sheets 130a may have different glossiness.

With reference to Fig. 1E, in the direction parallel to the optical axis Z1, when a thickness of each of the rotatable light blocking sheets 130a from the object-side surface 132a to the image-side surface 131a is defined as T, the following condition is satisfied: T = 0.05 mm.

<2nd Example of 1st Embodiment>

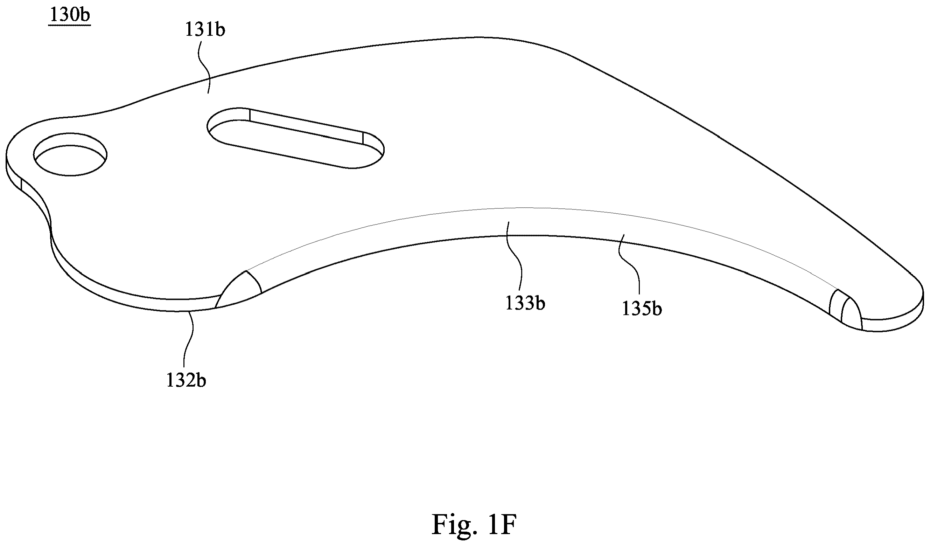

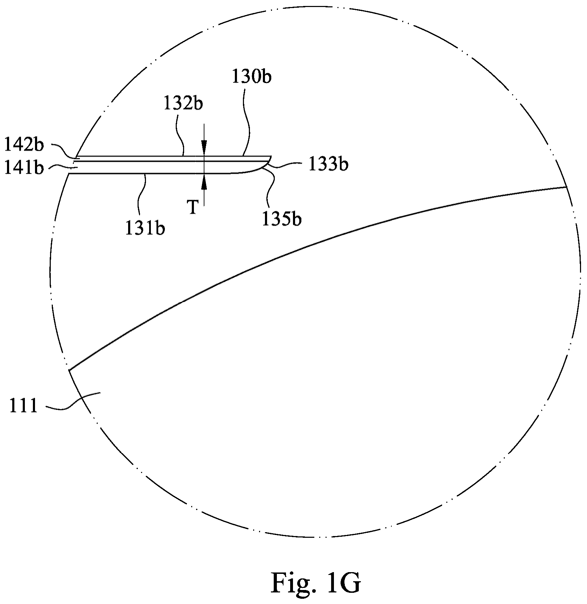

Fig. 1F is a three-dimensional view of one of rotatable light blocking sheets 130b of the 2nd example of the 1st embodiment in Fig. 1A. Fig. 1G is a partially enlarged view of one of the rotatable light blocking sheets 130b of the 2nd example of the 1st embodiment in Part 1E of Fig. 1A, and the specific shape of the rotatable light blocking sheets 130b in the 2nd example of the 1st embodiment is based on Fig. 1G. With reference to Fig. 1A to Fig. 1C, Fig. 1F and Fig. 1G, the adjustable aperture group 120 includes a plurality of rotatable light blocking sheets 130b, which are arranged around the optical axis Z1 and form the adjustable light-through hole 134. Each of the rotatable light blocking sheets 130b includes an image-side surface 131b, an object-side surface 132b and an inner annular surface 133b. The image-side surface 131b faces the lens elements, the object-side surface 132b is disposed opposite to the image-side surface 131b, and the inner annular surface 133b connects the image-side surface 131b and the object-side surface 132b.

The right side in Fig. 1G is the side close to the optical axis Z1, and the left side in Fig. 1G is the side away from the optical axis Z1. The image-side surface 131b of at least one of the rotatable light blocking sheets 130b includes a tapered surface 135b, which is disposed on a side of the image-side surface 131b close to the optical axis Z1, and the tapered surface 135b gradually approaches the object-side surface 132b along a direction close to the optical axis Z1. On a cross section parallel to the optical axis Z1 (as shown in Fig. 1G, the normal direction of the cross section being perpendicular to the optical axis Z1), the tapered surface 135b is in an arc shape.

The image-side surface 131b and the object-side surface 132b of each of the rotatable light blocking sheets 130b may be made of different materials, and the image-side surface 131b and the object-side surface 132b of each of the rotatable light blocking sheets 130b may have different glossiness.

With reference to Fig. 1G, in the direction parallel to the optical axis Z1, when a thickness of the at least one of the rotatable light blocking sheets 130b from the object-side surface 132b to the image-side surface 131b is defined as T, the following condition is satisfied: T = 0.035 mm.

<3rd Example of 1st Embodiment>

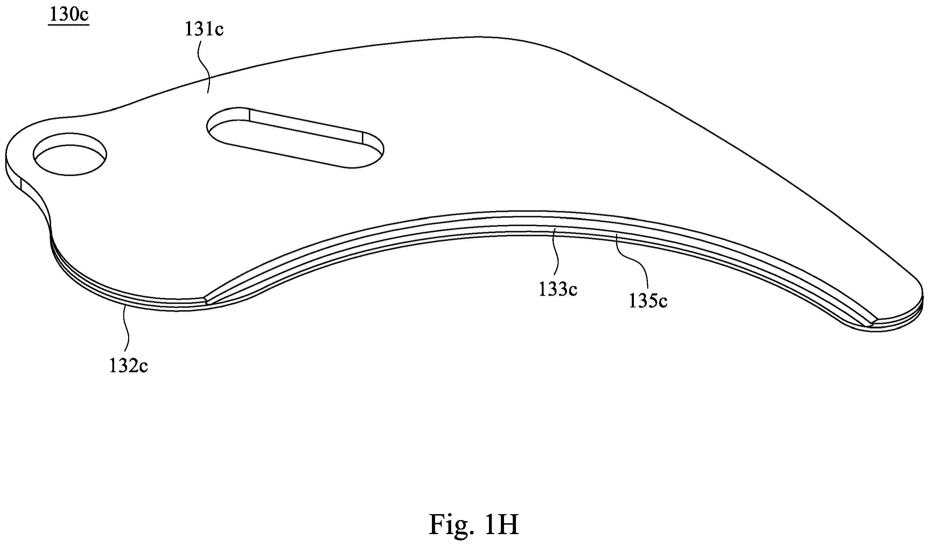

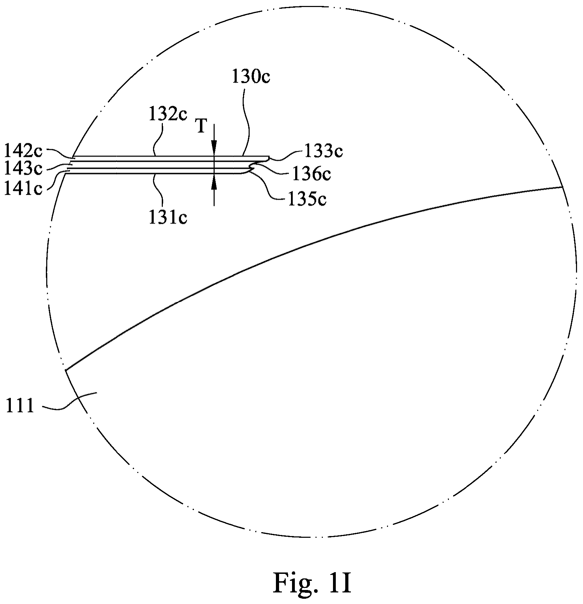

Fig. 1H is a three-dimensional view of one of rotatable light blocking sheets 130c of the 3rd example of the 1st embodiment in Fig. 1A. Fig. 1I is a partially enlarged view of one of the rotatable light blocking sheets 130c of the 3rd example of the 1st embodiment in Part 1E of Fig. 1A, and the specific shape of the rotatable light blocking sheets 130c in the 3rd example of the 1st embodiment is based on Fig. 1I. With reference to Fig. 1A to Fig. 1C, Fig. 1H and Fig. 1I, the adjustable aperture group 120 includes a plurality of rotatable light blocking sheets 130c, which are arranged around the optical axis Z1 and form the adjustable light-through hole 134. Each of the rotatable light blocking sheets 130c includes an image-side surface 131c, an object-side surface 132c and an inner annular surface 133c. The image-side surface 131c faces the lens elements, the object-side surface 132c is disposed opposite to the image-side surface 131c, and the inner annular surface 133c connects the image-side surface 131c and the object-side surface 132c.

The right side in Fig. 1I is the side close to the optical axis Z1, and the left side in Fig. 1I is the side away from the optical axis Z1. The image-side surface 131c includes a tapered surface 135c, which is disposed on a side of the image-side surface 131c close to the optical axis Z1, and the tapered surface 135c gradually approaches the object-side surface 132c along a direction close to the optical axis Z1.

Each of the rotatable light blocking sheets 130c includes, in order from an image side to an object side, a first light blocking layer 141c, a substrate 143c and a second light blocking layer 142c. The first light blocking layer 141c forms the image-side surface 131c. The second light blocking layer 142c forms the object-side surface 132c. A side of the substrate 143c close to the optical axis Z1 is located farther away from the optical axis Z1 than the second light blocking layer 142c located therefrom, and the substrate 143c forms a recessed structure 136c. The first light blocking layer 141c is located from the side of the substrate 143c close to the optical axis Z1 towards the second light blocking layer 142c along the direction close to the optical axis Z1 to form the tapered surface 135c.

The image-side surface 131c and the object-side surface 132c of each of the rotatable light blocking sheets 130c may be made of different materials, and the image-side surface 131c and the object-side surface 132c of each of the rotatable light blocking sheets 130c may have different glossiness.

With reference to Fig. 1I, in the direction parallel to the optical axis Z1, when a thickness of each of the rotatable light blocking sheets 130c from the object-side surface 132c to the image-side surface 131c is defined as T, the following condition is satisfied: T = 0.05 mm.

<4th Example of 1st Embodiment>

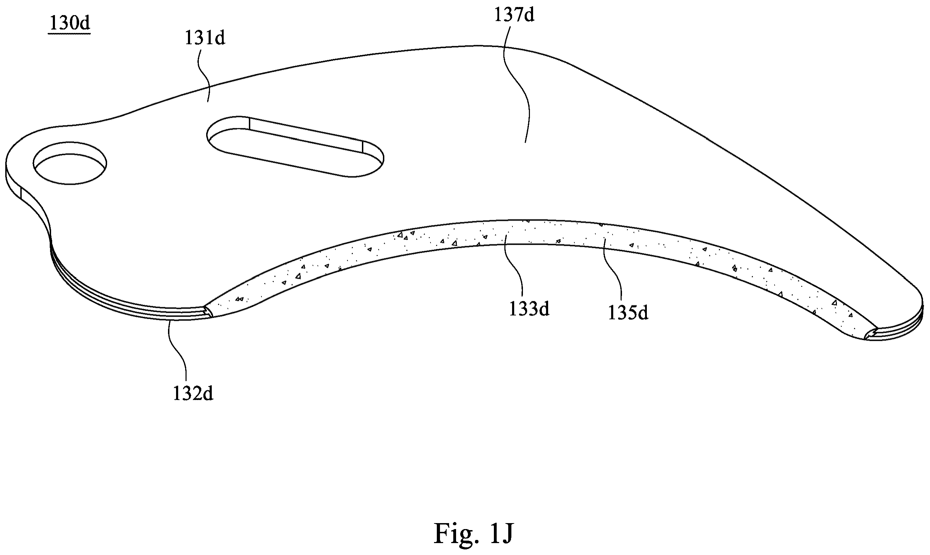

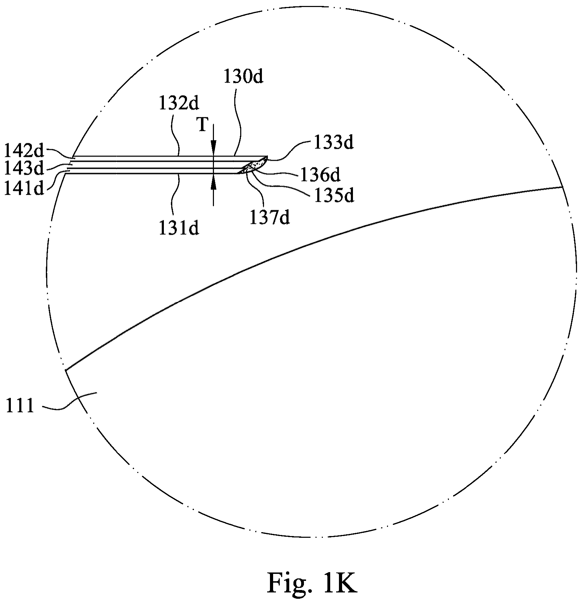

Fig. 1J is a three-dimensional view of one of rotatable light blocking sheets 130d of the 4th example of the 1st embodiment in Fig. 1A. Fig. 1K is a partially enlarged view of one of the rotatable light blocking sheets 130d of the 4th example of the 1st embodiment in Part 1E of Fig. 1A, and the specific shape of the rotatable light blocking sheets 130d in the 4th example of the 1st embodiment is based on Fig. 1K. With reference to Fig. 1A to Fig. 1C, Fig. 1J and Fig. 1K, the adjustable aperture group 120 includes a plurality of rotatable light blocking sheets 130d, which are arranged around the optical axis Z1 and form the adjustable light-through hole 134. Each of the rotatable light blocking sheets 130d includes an image-side surface 131d, an object-side surface 132d and an inner annular surface 133d. The image-side surface 131d faces the lens elements, the object-side surface 132d is disposed opposite to the image-side surface 131d, and the inner annular surface 133d connects the image-side surface 131d and the object-side surface 132d.

The right side in Fig. 1K is the side close to the optical axis Z1, and the left side in Fig. 1K is the side away from the optical axis Z1. The image-side surface 131d of at least one of the rotatable light blocking sheets 130d includes a tapered surface 135d, which is disposed on a side of the image-side surface 131d close to the optical axis Z1, and the tapered surface 135d gradually approaches the object-side surface 132d along a direction close to the optical axis Z1. On a cross section parallel to the optical axis Z1 (as shown in Fig. 1K), the tapered surface 135d is in an arc shape.

The at least one of the rotatable light blocking sheets 130d further includes a coating layer 137d, which is disposed on a side of the at least one of the rotatable light blocking sheets 130d close to the optical axis Z1, and the coating layer 137d forms the tapered surface 135d. The coating layer 137d is a light-absorbing coating layer. It is noted that the coating layer 137d shown in this example is merely for illustrating the characteristics and range of coating, and is not for the actual thickness of the coating layer according to the present disclosure.

Each of the rotatable light blocking sheets 130d includes, in order from an image side to an object side, a first light blocking layer 141d, a substrate 143d and a second light blocking layer 142d. The first light blocking layer 141d forms the image-side surface 131d. The second light blocking layer 142d forms the object-side surface 132d. A side of the substrate 143d close to the optical axis Z1 is located farther away from the optical axis Z1 than the second light blocking layer 142d located therefrom, and the substrate 143d forms a recessed structure 136d. The coating layer 137d is disposed on a side of the substrate 143d close to the optical axis Z1, and at least a portion of the coating layer 137d is disposed on the recessed structure 136d. The coating layer 137d forms the tapered surface 135d.

The image-side surface 131d and the object-side surface 132d of each of the rotatable light blocking sheets 130d may be made of different materials, and the image-side surface 131d and the object-side surface 132d of each of the rotatable light blocking sheets 130d may have different glossiness.

With reference to Fig. 1K, in the direction parallel to the optical axis Z1, when a thickness of the at least one of the rotatable light blocking sheets 130d from the object-side surface 132d to the image-side surface 131d is defined as T, the following condition is satisfied: T = 0.05 mm.

<5th Example of 1st Embodiment>

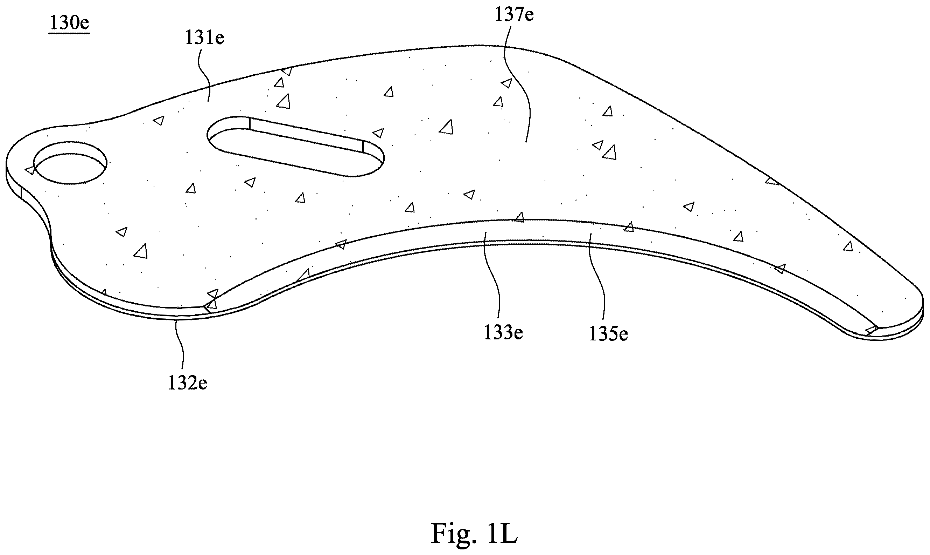

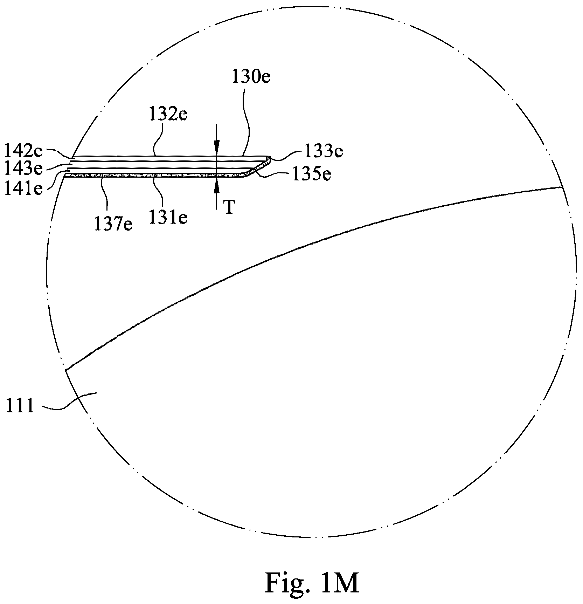

Fig. 1L is a three-dimensional view of one of rotatable light blocking sheets 130e of the 5th example of the 1st embodiment in Fig. 1A. Fig. 1M is a partially enlarged view of one of the rotatable light blocking sheets 130e of the 5th example of the 1st embodiment in Part 1E of Fig. 1A, and the specific shape of the rotatable light blocking sheets 130e in the 5th example of the 1st embodiment is based on Fig. 1M. With reference to Fig. 1A to Fig. 1C, Fig. 1L and Fig. 1M, the adjustable aperture group 120 includes a plurality of rotatable light blocking sheets 130e, which are arranged around the optical axis Z1 and form the adjustable light-through hole 134. Each of the rotatable light blocking sheets 130e includes an image-side surface 131e, an object-side surface 132e and an inner annular surface 133e. The image-side surface 131e faces the lens elements, the object-side surface 132e is disposed opposite to the image-side surface 131e, and the inner annular surface 133e connects the image-side surface 131e and the object-side surface 132e.

The right side in Fig. 1M is the side close to the optical axis Z1, and the left side in Fig. 1M is the side away from the optical axis Z1. The image-side surface 131e of at least one of the rotatable light blocking sheets 130e includes a tapered surface 135e, which is disposed on a side of the image-side surface 131e close to the optical axis Z1, and the tapered surface 135e gradually approaches the object-side surface 132e along a direction close to the optical axis Z1. On a cross section parallel to the optical axis Z1 (as shown in Fig. 1M), the tapered surface 135e is in an arc shape.

The at least one of the rotatable light blocking sheets 130e further includes a coating layer 137e, which is disposed on a side of the at least one of the rotatable light blocking sheets 130e close to the optical axis Z1, and the coating layer 137e forms the tapered surface 135e. The coating layer 137e is a light-absorbing coating layer.

Each of the rotatable light blocking sheets 130e includes, in order from an image side to an object side, a first light blocking layer 141e, a substrate 143e and a second light blocking layer 142e. The first light blocking layer 141e forms the image-side surface 131e. The second light blocking layer 142e forms the object-side surface 132e. A side of the substrate 143e close to the optical axis Z1 is located farther away from the optical axis Z1 than the second light blocking layer 142e located therefrom. The first light blocking layer 141e is located from the side of the substrate 143e close to the optical axis Z1 towards the second light blocking layer 142e along the direction close to the optical axis Z1 to form the tapered surface 135e.

The image-side surface 131e and the object-side surface 132e of each of the rotatable light blocking sheets 130e may be made of different materials, and the image-side surface 131e and the object-side surface 132e of each of the rotatable light blocking sheets 130e may have different glossiness.

With reference to Fig. 1M, in the direction parallel to the optical axis Z1, when a thickness of the at least one of the rotatable light blocking sheets 130e from the object-side surface 132e to the image-side surface 131e is defined as T, the following condition is satisfied: T = 0.06 mm.

<6th Example of 1st Embodiment>

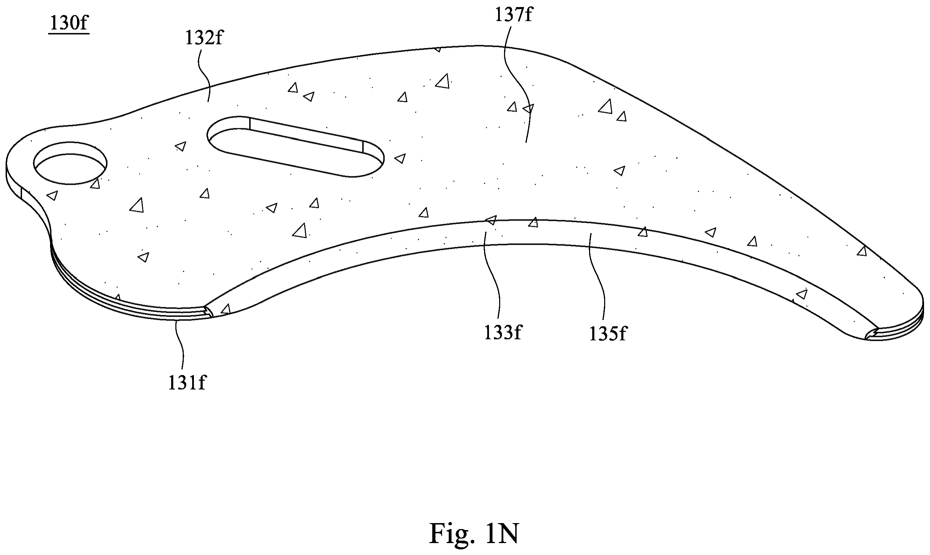

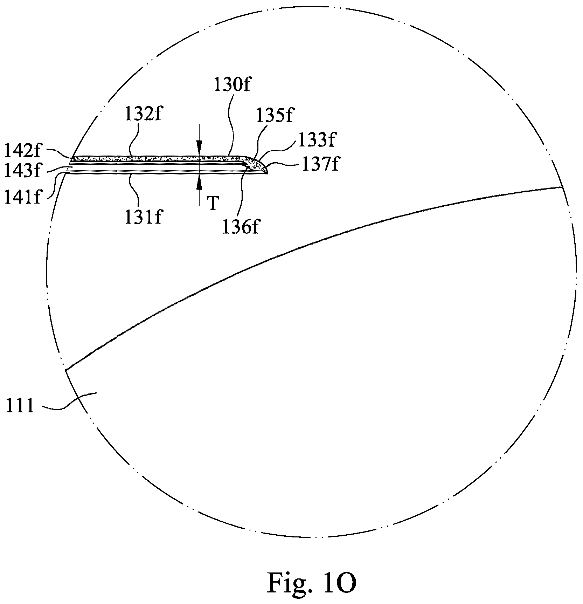

Fig. 1N is a three-dimensional view of one of rotatable light blocking sheets 130f of the 6th example of the 1st embodiment in Fig. 1A. Fig. 1O is a partially enlarged view of one of the rotatable light blocking sheets 130f of the 6th example of the 1st embodiment in Part 1E of Fig. 1A, and the specific shape of the rotatable light blocking sheets 130f in the 6th example of the 1st embodiment is based on Fig. 1O. With reference to Fig. 1A to Fig. 1C, Fig. 1N and Fig. 1O, the adjustable aperture group 120 includes a plurality of rotatable light blocking sheets 130f, which are arranged around the optical axis Z1 and form the adjustable light-through hole 134. Each of the rotatable light blocking sheets 130f includes an image-side surface 131f, an object-side surface 132f and an inner annular surface 133f. The image-side surface 131f faces the lens elements, the object-side surface 132f is disposed opposite to the image-side surface 131f, and the inner annular surface 133f connects the image-side surface 131f and the object-side surface 132f.

The right side in Fig. 1O is the side close to the optical axis Z1, and the left side in Fig. 1O is the side away from the optical axis Z1. On a side of one (or at least one) of the rotatable light blocking sheets 130f close to the optical axis Z1, a thickness T of the rotatable light blocking sheet 130f is tapered along a direction close to the optical axis Z1. The one of the rotatable light blocking sheets 130f further includes a coating layer 137f, which is disposed on the side of the rotatable light blocking sheet 130f close to the optical axis Z1, and the coating layer 137f forms a tapered surface 135f. Specifically, the coating layer 137f forms the object-side surface 132f and the inner annular surface 133f, and the coating layer 137f may be a light-absorbing coating layer.

Each of the rotatable light blocking sheets 130f includes, in order from an image side to an object side, a first light blocking layer 141f, a substrate 143f and a second light blocking layer 142f. The first light blocking layer 141f forms the image-side surface 131f. The second light blocking layer 142f forms the object-side surface 132f. A side of the substrate 143f close to the optical axis Z1 is located farther away from the optical axis Z1 than the second light blocking layer 142f located therefrom. One of the first light blocking layer 141f and the second light blocking layer 142f is located from the side of the substrate 143f close to the optical axis Z1 towards the other one of the first light blocking layer 141f and the second light blocking layer 142f along the direction close to the optical axis Z1.

Specifically, the second light blocking layer 142f is located from the side of the substrate 143f close to the optical axis Z1 towards the first light blocking layer 141f along the direction close to the optical axis Z1. The tapered surface 135f is disposed on the object-side surface 132f. On a cross section parallel to the optical axis Z1 (as shown in Fig. 1O), the tapered surface 135f is in an arc shape.

The image-side surface 131f and the object-side surface 132f of each of the rotatable light blocking sheets 130f may be made of different materials, and the image-side surface 131f and the object-side surface 132f of each of the rotatable light blocking sheets 130f may have different glossiness.

With reference to Fig. 1O, in the direction parallel to the optical axis Z1, when the thickness (indicating the uniform thickness outside the tapered surface 135f) of the one of the rotatable light blocking sheets 130f from the object-side surface 132f to the image-side surface 131f is defined as T, the following condition is satisfied: T = 0.05 mm.

<7th Example of 1st Embodiment>

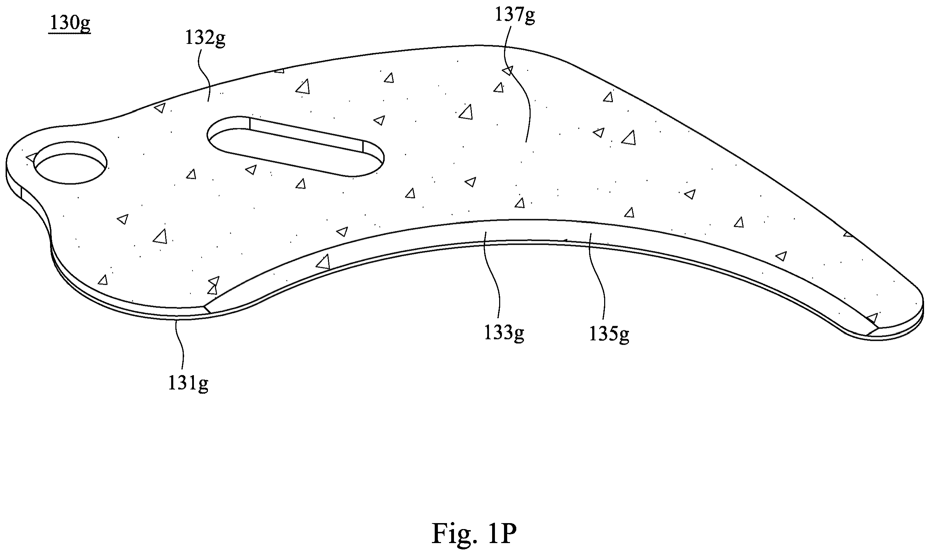

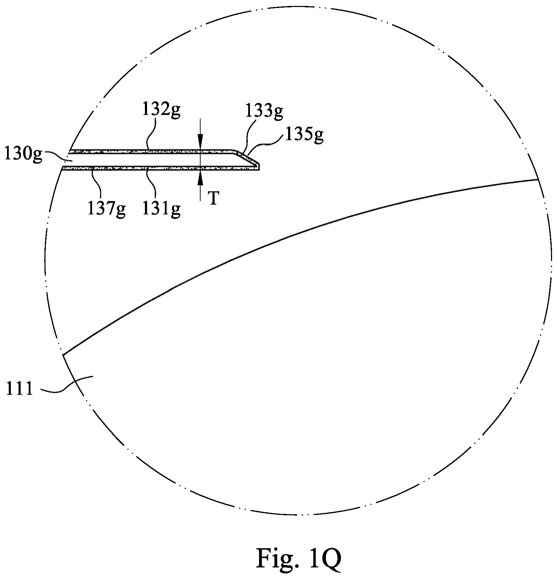

Fig. 1P is a three-dimensional view of one of rotatable light blocking sheets 130g of the 7th example of the 1st embodiment in Fig. 1A. Fig. 1Q is a partially enlarged view of one of the rotatable light blocking sheets 130g of the 7th example of the 1st embodiment in Part 1E of Fig. 1A, and the specific shape of the rotatable light blocking sheets 130g in the 7th example of the 1st embodiment is based on Fig. 1Q. With reference to Fig. 1A to Fig. 1C, Fig. 1P and Fig. 1Q, the adjustable aperture group 120 includes a plurality of rotatable light blocking sheets 130g, which are arranged around the optical axis Z1 and form the adjustable light-through hole 134. Each of the rotatable light blocking sheets 130g includes an image-side surface 131g, an object-side surface 132g and an inner annular surface 133g. The image-side surface 131g faces the lens elements, the object-side surface 132g is disposed opposite to the image-side surface 131g, and the inner annular surface 133g connects the image-side surface 131g and the object-side surface 132g.

The right side in Fig. 1Q is the side close to the optical axis Z1, and the left side in Fig. 1Q is the side away from the optical axis Z1. On a side of one (or at least one) of the rotatable light blocking sheets 130g close to the optical axis Z1, a thickness T of the rotatable light blocking sheet 130g is tapered along a direction close to the optical axis Z1. The one of the rotatable light blocking sheets 130g further includes a coating layer 137g, which is disposed on the side of the rotatable light blocking sheet 130g close to the optical axis Z1, and the coating layer 137g forms a tapered surface 135g. Specifically, the coating layer 137g forms the image-side surface 131g, the object-side surface 132g and the inner annular surface 133g, and the coating layer 137g may be a light-absorbing coating layer. The tapered surface 135g is disposed on the object-side surface 132g.

The image-side surface 131g and the object-side surface 132g of each of the rotatable light blocking sheets 130g may be made of different materials, and the image-side surface 131g and the object-side surface 132g of each of the rotatable light blocking sheets 130g may have different glossiness.

With reference to Fig. 1Q, in the direction parallel to the optical axis Z1, when the thickness (indicating the uniform thickness outside the tapered surface 135g) of the one of the rotatable light blocking sheets 130g from the object-side surface 132g to the image-side surface 131g is defined as T, the following condition is satisfied: T = 0.06 mm.

<2nd Embodiment>

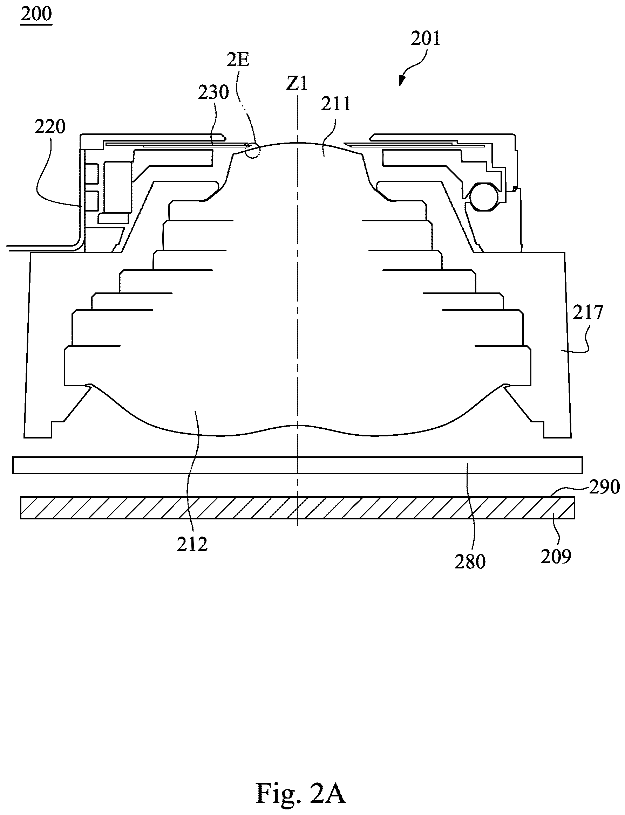

Fig. 2A is a schematic view of a camera module 200 according to the 2nd embodiment of the present disclosure. With reference to Fig. 2A, the camera module 200 includes an imaging lens assembly 201 and an image sensor 209. The image sensor 209 is disposed on an image surface 290 of the imaging lens assembly 201. The imaging lens assembly 201 includes a plurality of lens elements (i.e., a first lens element 211 and a plurality of lens elements 212), an adjustable aperture group 220 and a filter 280. The lens elements are arranged in sequence along an optical axis Z1. The adjustable aperture group 220 is disposed on an object side of the lens elements, and the filter 280 is disposed on an image side of the lens elements.

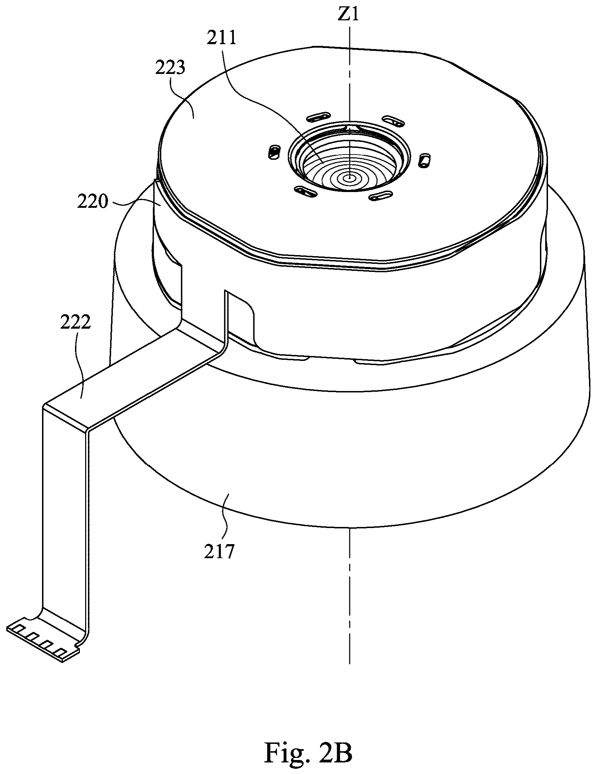

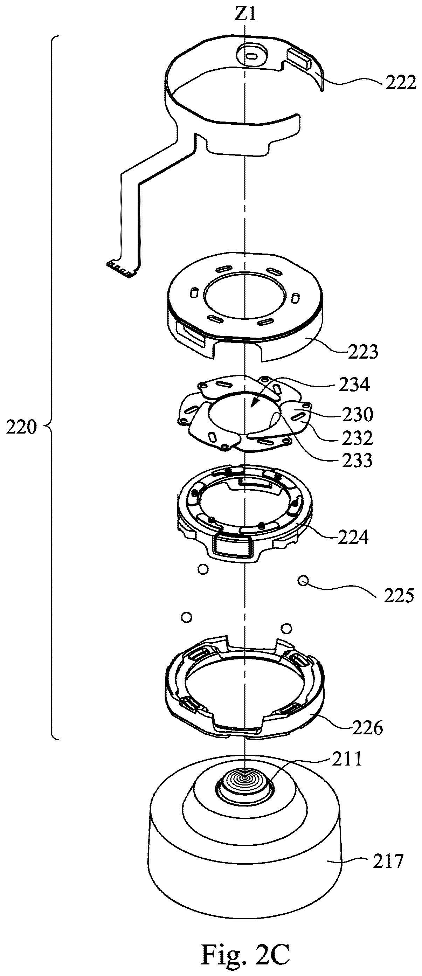

Fig. 2B is a three-dimensional view of the imaging lens assembly 201 of the camera module 200 of the 2nd embodiment in Fig. 2A, and Fig. 2C is an exploded view of the imaging lens assembly 201 of the camera module 200 of the 2nd embodiment in Fig. 2A. With reference to Fig. 2A to Fig. 2C, the adjustable aperture group 220 includes a plurality of rotatable light blocking sheets 230, which are arranged around the optical axis Z1 and form an adjustable light-through hole 234. Each of the rotatable light blocking sheets 230 includes an image-side surface, an object-side surface 232 and an inner annular surface 233. The image-side surface faces the lens elements, the object-side surface 232 is disposed opposite to the image-side surface, and the inner annular surface 233 connects the image-side surface and the object-side surface 232.

The imaging lens assembly 201 further includes a lens barrel 217 surrounding the optical axis Z1. The lens elements and the adjustable aperture group 220 are connected to each other via the lens barrel 217 and disposed on an inner side and an outer side, respectively, of the lens barrel 217. One of the lens elements is the first lens element 211, which is located closer to the adjustable aperture group 220 (closer to the rotatable light blocking sheets 230 thereof, particularly) than the other lens elements 212 located thereto, and the first lens element 211 is more convex on the object side than the lens barrel 217 thereon. Furthermore, the adjustable aperture group 220 further includes a driving circuit 222, fixing portions 223, 226, a rotating portion 224 and rolling elements 225, which are all disposed on a side of the lens barrel 217 close to the object side, so as to further improve focusing quality.

<1st Example of 2nd Embodiment>

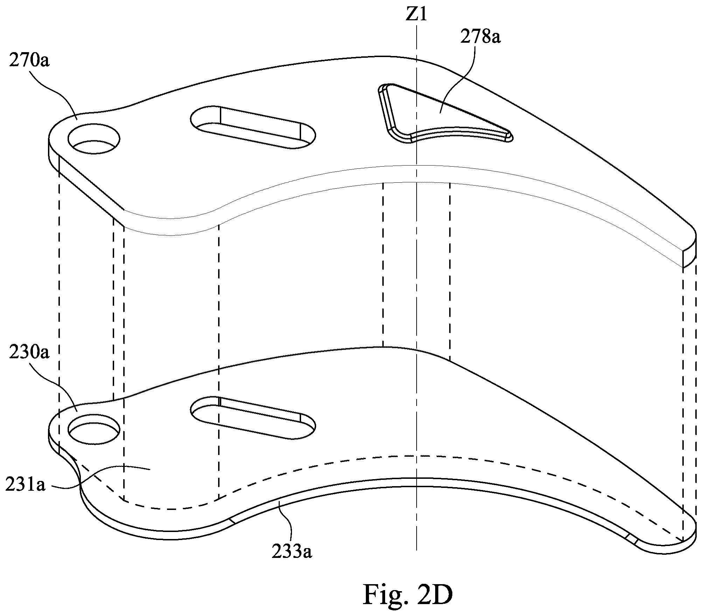

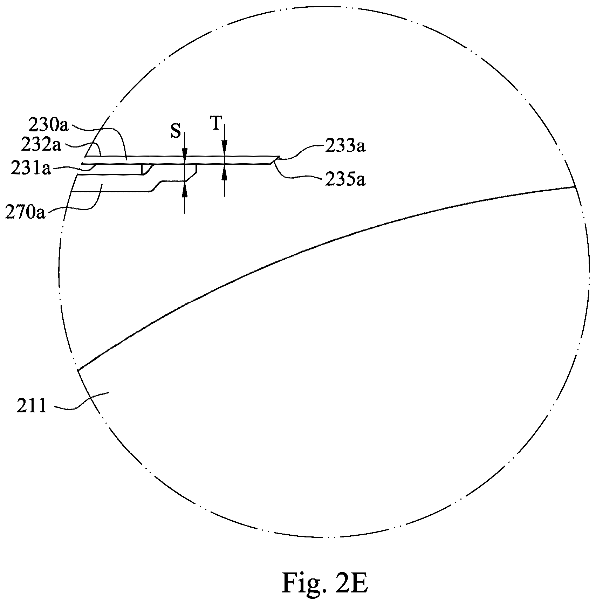

Fig. 2D is a partial three-dimensional view of the adjustable aperture group 220 of the 1st example of the 2nd embodiment in Fig. 2A. Fig. 2E is a partially enlarged view of the adjustable aperture group 220 of the 1st example of the 2nd embodiment in Part 2E of Fig. 2A, and the specific shape of the adjustable aperture group 220 in the 1st example of the 2nd embodiment is based on Fig. 2E. With reference to Fig. 2A to Fig. 2E, the adjustable aperture group 220 includes a plurality of rotatable light blocking sheets 230a, which are arranged around the optical axis Z1 and form the adjustable light-through hole 234. Each of the rotatable light blocking sheets 230a includes an image-side surface 231a, an object-side surface 232a and an inner annular surface 233a. The image-side surface 231a faces the lens elements, the object-side surface 232a is disposed opposite to the image-side surface 231a, and the inner annular surface 233a connects the image-side surface 231a and the object-side surface 232a.

The right side in Fig. 2E is the side close to the optical axis Z1, and the left side in Fig. 2E is the side away from the optical axis Z1. The adjustable aperture group 220 further includes an anti-bending sheet 270a, which is coupled to one of the rotatable light blocking sheets 230a and simultaneously rotates therewith. The anti-bending sheet 270a is located farther from the optical axis Z1 than the rotatable light blocking sheets 230a located therefrom. The anti-bending sheet 270a includes a protrusion structure 278a, which protrudes in a direction away from the one of the rotatable light blocking sheets 230a. In addition, the adjustable aperture group 220 may include a plurality of anti-bending sheets 270a, and each of the anti-bending sheets 270a is coupled to a corresponding one of the rotatable light blocking sheets 230a and simultaneously rotates therewith.

The image-side surface 231a of the one of the rotatable light blocking sheets 230a includes a tapered surface 235a, which is disposed on a side of the image-side surface 231a close to the optical axis Z1, and the tapered surface 235a gradually approaches the object-side surface 232a along a direction close to the optical axis Z1.

The image-side surface 231a and the object-side surface 232a of each of the rotatable light blocking sheets 230a may be made of different materials, and the image-side surface 231a and the object-side surface 232a of each of the rotatable light blocking sheets 230a may have different glossiness.

With reference to Fig. 2E, in the direction parallel to the optical axis Z1, when a thickness of the anti-bending sheet 270a is defined as S, and a thickness of the one of the rotatable light blocking sheets 230a from the object-side surface 232a to the image-side surface 231a is defined as T, the following conditions are satisfied: T = 0.023 mm, S = 0.049 mm, and T/S = 0.469.

In addition, each of the rotatable light blocking sheets 230a may include, in order from an image side to an object side, a first light blocking layer, a substrate and a second light blocking layer (not shown in drawings). The first light blocking layer forms the image-side surface 231a. The second light blocking layer forms the object-side surface 232a. A side of the substrate close to the optical axis Z1 is located farther away from the optical axis Z1 than the first light blocking layer and the second light blocking layer located therefrom.

At least one of the rotatable light blocking sheets 230a may further include a coating layer (not shown in drawings), which is disposed on a side of the at least one of the rotatable light blocking sheets 230a close to the optical axis Z1.

<2nd Example of 2nd Embodiment>

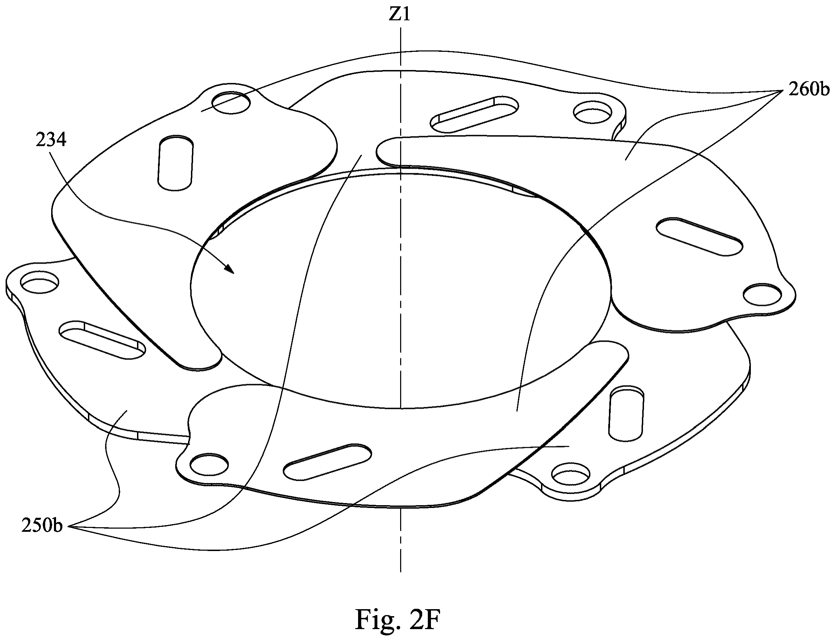

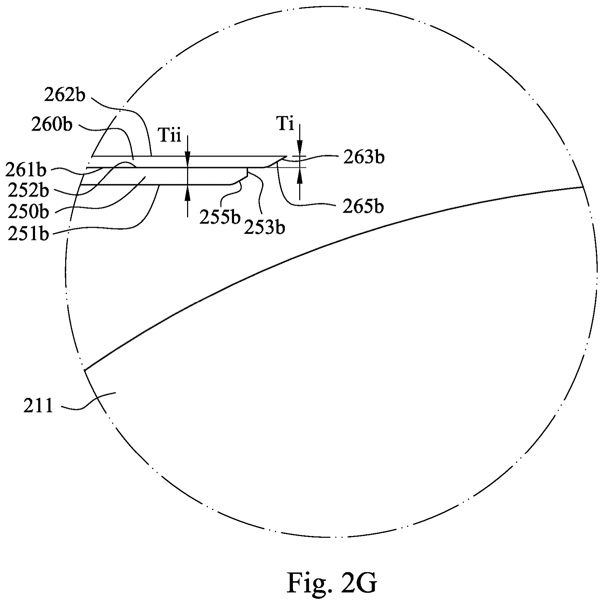

Fig. 2F is a partial three-dimensional view of an adjustable aperture group 220 of the 2nd example of the 2nd embodiment in Fig. 2A. Fig. 2G is a partially enlarged view of the adjustable aperture group 220 of the 2nd example of the 2nd embodiment in Part 2E of Fig. 2A, and the specific shape of the adjustable aperture group 220 in the 2nd example of the 2nd embodiment is based on Fig. 2G. With reference to Fig. 2A to Fig. 2C, Fig. 2F and Fig. 2G, the adjustable aperture group 220 includes a plurality of rotatable light blocking sheets 230. The rotatable light blocking sheets 230 includes a plurality of first rotatable light blocking sheets 260b and a plurality of second rotatable light blocking sheets 250b. The first rotatable light blocking sheets 260b and the second rotatable light blocking sheets 250b are alternately arranged around the optical axis Z1 and form the adjustable light-through hole 234. Each of the first rotatable light blocking sheets 260b includes an image-side surface 261b, an object-side surface 262b and an inner annular surface 263b. The image-side surface 261b faces the lens elements, the object-side surface 262b is disposed opposite to the image-side surface 261b, and the inner annular surface 263b connects the image-side surface 261b and the object-side surface 262b. Each of the second rotatable light blocking sheets 250b includes an image-side surface 251b, an object-side surface 252b and an inner annular surface 253b. The image-side surface 251b faces the lens elements, the object-side surface 252b is disposed opposite to the image-side surface 251b, and the inner annular surface 253b connects the image-side surface 251b and the object-side surface 252b.

The second rotatable light blocking sheets 250b are partially overlapped with the first rotatable light blocking sheets 260b in a direction parallel to the optical axis Z1 and located closer to the lens elements than the first rotatable light blocking sheets 260b located thereto.

The image-side surface 261b of each of the first rotatable light blocking sheets 260b includes a tapered surface 265b, which is disposed on a side of the image-side surface 261b close to the optical axis Z1, and the tapered surface 265b gradually approaches the object-side surface 262b along a direction close to the optical axis Z1. The image-side surface 251b of each of the second rotatable light blocking sheets 250b includes a tapered surface 255b, which is disposed on a side of the image-side surface 251b close to the optical axis Z1, and the tapered surface 255b gradually approaches the object-side surface 252b along a direction close to the optical axis Z1.

The image-side surface 261b and the object-side surface 262b of each of the first rotatable light blocking sheets 260b may be made of different materials, and the image-side surface 251b and the object-side surface 252b of each of the second rotatable light blocking sheets 250b may be made of different materials.

With reference to Fig. 2G, in the direction parallel to the optical axis Z1, when a thickness of each of the first rotatable light blocking sheets 260b from the object-side surface 262b to the image-side surface 261b is defined as Ti, and a thickness of each of the second rotatable light blocking sheets 250b from the object-side surface 252b to the image-side surface 251b is defined as Tii, the following conditions are satisfied: Ti = 0.033 mm, Tii = 0.05 mm, and Ti/Tii = 0.66.

In addition, at least one of the first rotatable light blocking sheets 260b may include, in order from an image side to an object side, a first light blocking layer, a substrate and a second light blocking layer (not shown in drawings), the first light blocking layer forms the image-side surface 261b, the second light blocking layer forms the object-side surface 262b, and a side of the substrate close to the optical axis Z1 is located farther away from the optical axis Z1 than the first light blocking layer and the second light blocking layer located therefrom. At least one of the second rotatable light blocking sheets 250b may include, in order from an image side to an object side, a first light blocking layer, a substrate and a second light blocking layer (not shown in drawings), the first light blocking layer forms the image-side surface 251b, the second light blocking layer forms the object-side surface 252b, and a side of the substrate close to the optical axis Z1 is located farther away from the optical axis Z1 than the first light blocking layer and the second light blocking layer located therefrom.

At least one of the first rotatable light blocking sheets 260b may further include a coating layer (not shown in drawings), which is disposed on a side of the at least one of the first rotatable light blocking sheets 260b close to the optical axis Z1. At least one of the second rotatable light blocking sheets 250b may further include a coating layer (not shown in drawings), which is disposed on a side of the at least one of the second rotatable light blocking sheets 250b close to the optical axis Z1.

<3rd Embodiment>

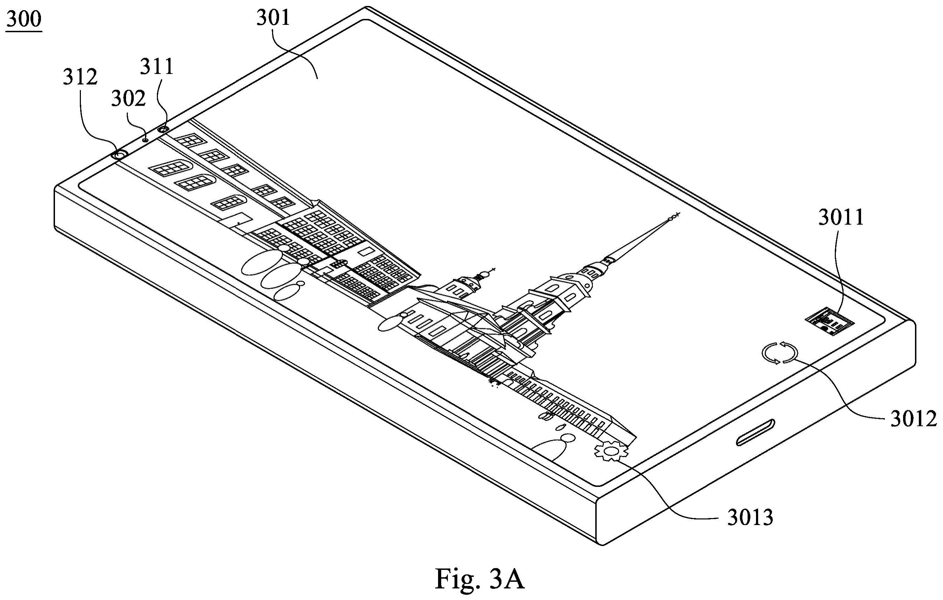

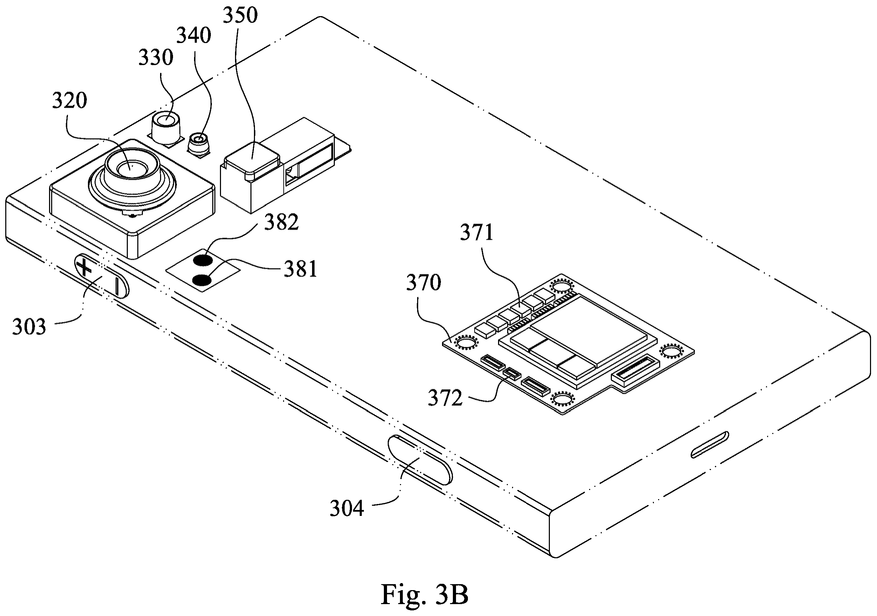

With reference to Fig. 3A and Fig. 3B, Fig. 3A is a schematic view of an electronic device 300 according to the 3rd embodiment of the present disclosure, and Fig. 3B is another schematic view of the electronic device 300 of the 3rd embodiment in Fig. 3A. In Fig. 3A and Fig. 3B, the electronic device 300 is a smartphone, and includes a plurality of camera modules and an image capturing control interface 301. Furthermore, the camera modules are a front camera module 311, a TOF (Time-of-Flight) module 312, a wide-angle camera module 320, an ultra-wide-angle camera module 330, a macro camera module 340 and a telephoto camera module 350. The image capturing control interface 301 is a touchscreen, but the present disclosure is not limited thereto. Specifically, each of the camera modules may be any of the camera modules described in the 1st and 2nd embodiments above, but the present disclosure is not limited thereto.

The front camera module 311 and the TOF module 312 can be located on the same side as the image capturing control interface 301. A reminder light 302 can be provided between the front camera module 311 and the TOF module 312. The image capturing control interface 301 can be configured with an image playback button 3011, a camera module switching button 3012 and an integrated menu button 3013 as needed. This facilitates switching and operating the camera modules, as well as confirming the camera results. Furthermore, the electronic device 300 may further include a zoom control button 303 and a focus button 304, which are mechanical buttons located on the frame of the electronic device 300 to optimize user controllability.

In addition, the electronic device 300 may further include an electronic component board 370, on which electronic components such as electronic components 371 and connectors 372 may be installed according to camera requirements. Furthermore, the electronic component board 370 may be provided with a single-chip system, in which an image software processor, an image signal processor, a position locator, a transmission signal processor, a gyroscope, a storage unit, a random access memory, etc. may be integrated.

To improve capturing quality, the electronic device 300 may further include a light-emitting element 381 and an auxiliary focus element 382. The light-emitting element 381 may be a flash element, and the auxiliary focus element 382 may be an infrared ranging element, a laser focus module, or the like. This facilitates the automatic focus function and optical image stabilization component of the camera modules in the electronic device 300 to achieve good image quality, and helps the electronic device 300 according to the present disclosure to have multiple shooting modes, such as optimized selfie, low-light HDR (High Dynamic Range) imaging, and high-resolution 4K (4K Resolution) video recording.

<4th Embodiment>

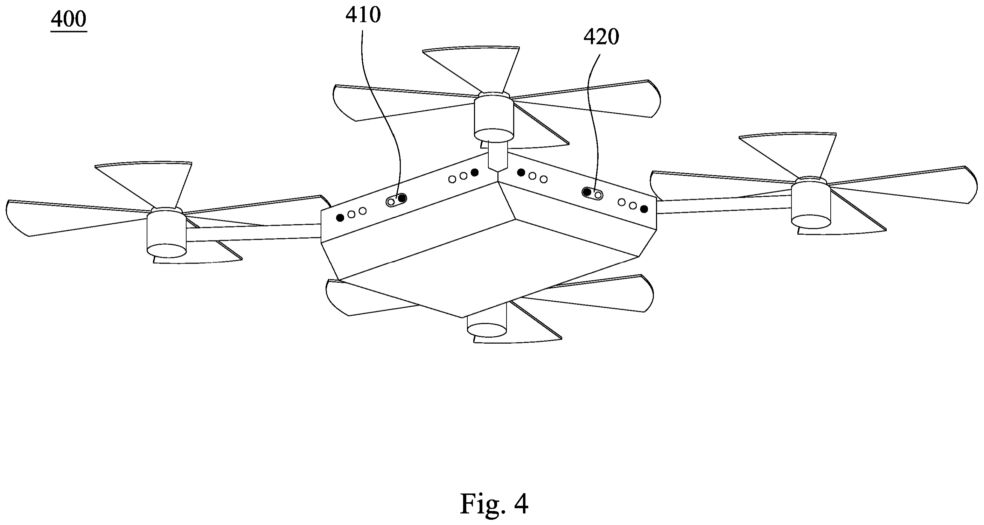

With reference to Fig. 4, Fig. 4 is a schematic view of an electronic device 400 according to the 4th embodiment of the present disclosure. In Fig. 4, the electronic device 400 is a drone, which includes a side camera module 410 and a front camera module 420. Each of the camera modules may be any of the camera modules described in the 1st and 2nd embodiments above, but the present disclosure is not limited thereto.

<5th Embodiment>

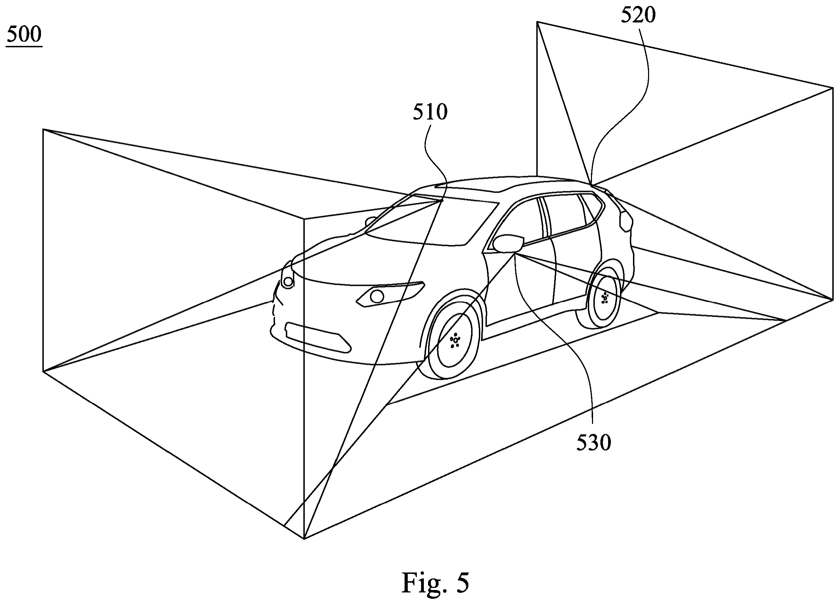

With reference to Fig. 5, Fig. 5 is a schematic view of a vehicle instrument 500 according to the 5th embodiment of the present disclosure. In Fig. 5, the vehicle instrument 500 includes a front camera module 510, a rear camera module 520 and a side camera module 530. Each of the camera modules may be any of the camera modules described in the 1st and 2nd embodiments above, but the present disclosure is not limited thereto.

**Claims**

1. An imaging lens assembly (101), **characterized in** comprising:

   a plurality of lens elements (111, 112) arranged in sequence along an optical axis (Z1); and
   an adjustable aperture group (120) disposed on an object side of the lens elements (111, 112), wherein the adjustable aperture group (120) comprises a plurality of rotatable light blocking sheets (130a), which are arranged around the optical axis (Z1) and form an adjustable light-through hole (134), each of the rotatable light blocking sheets (130a) comprises an image-side surface (131a) and an object-side surface (132a), the image-side surface (131a) faces the lens elements (111, 112), and the object-side surface (132a) is disposed opposite to the image-side surface (131a);
   wherein the image-side surface (131a) comprises a tapered surface (135a), which is disposed on a side of the image-side surface (131a) close to the optical axis (Z1), and the tapered surface (135a) gradually approaches the object-side surface (132a) along a direction close to the optical axis (Z1).

2. The imaging lens assembly (101) of claim 1, wherein each of the rotatable light blocking sheets (130a) comprises, in order from an image side to an object side:

   a first light blocking layer (141a) forming the image-side surface (131a);
   a substrate (143a); and
   a second light blocking layer (142a) forming the object-side surface (132a);
   wherein a side of the substrate (143a) close to the optical axis (Z1) is located farther away from the optical axis (Z1) than the first light blocking layer (141a) and the second light blocking layer (142a) located therefrom.

3. The imaging lens assembly (101) of any of claims 1-2, wherein the first light blocking layer (141a) is located from the side of the substrate (143a) close to the optical axis (Z1) towards the second light blocking layer (142a) along the direction close to the optical axis (Z1) to form the tapered surface (135a).

4. The imaging lens assembly (101) of any of claims 1-3, wherein the image-side surface (131a) and the object-side surface (132a) of each of the rotatable light blocking sheets (130a) are made of different materials.

5. The imaging lens assembly (101) of any of claims 1-4, wherein the image-side surface (131a) and the object-side surface (132a) of each of the rotatable light blocking sheets (130a) have different glossiness.

6. The imaging lens assembly (101) of any of claims 1-5, wherein at least one of the rotatable light blocking sheets (130d) further comprises a coating layer (137d), which is disposed on a side of the at least one of the rotatable light blocking sheets (130d) close to the optical axis (Z1), and the coating layer (137d) forms the tapered surface (135d).

7. The imaging lens assembly (101) of any of claims 1-6, wherein the coating layer (137d) is a light-absorbing coating layer.

8. The imaging lens assembly (201) of any of claims 1-7, wherein the adjustable aperture group (220) further comprises an anti-bending sheet (270a), which is coupled to one of the rotatable light blocking sheets (230a) and simultaneously rotates therewith;

   wherein the anti-bending sheet (270a) is located farther from the optical axis (Z1) than the rotatable light blocking sheets (230a) located therefrom;
   wherein in a direction parallel to the optical axis (Z1), a thickness of the anti-bending sheet (270a) is defined as S, a thickness of the one of the rotatable light blocking sheets (230a) from the object-side surface (232a) to the image-side surface (231a) is defined as T, and the following condition is satisfied:

$$0.23 \leq T/S \leq 0.94.$$

9. The imaging lens assembly (201) of any of claims 1-8, wherein the rotatable light blocking sheets comprise:

a first rotatable light blocking sheet (260b); and a second rotatable light blocking sheet (250b) partially overlapped with the first rotatable light blocking sheet (260b) in a direction parallel to the optical axis (Z1) and located closer to the lens elements (211, 212) than the first rotatable light blocking sheet (260b) located thereto; wherein in the direction parallel to the optical axis (Z1), a thickness of the first rotatable light blocking sheet (260b) from the object-side surface (262b) to the image-side surface (261b) is defined as Ti, a thickness of the second rotatable light blocking sheet (250b) from the object-side surface (252b) to the image-side surface (251b) is defined as Tii, and the following condition is satisfied:

$$0.23 \leq Ti/Tii \leq 0.95.$$

10. The imaging lens assembly (101) of any of claims 1-9, further comprising:

a lens barrel (117) surrounding the optical axis (Z1), wherein the lens elements (111, 112) and the adjustable aperture group (120) are disposed at the lens barrel (117); wherein one of the lens elements (111, 112) is a first lens element (111), which is located closer to the adjustable aperture group (120) than the other of the lens elements (111, 112) located thereto, and the first lens element (111) is more convex on the object side than the lens barrel (117) thereon.

11. A camera module (100), **characterized in** comprising:
the imaging lens assembly (101) of any of claims 1-10.

12. An electronic device (300), **characterized in** comprising:
the camera module (100) of claim 11.

13. An imaging lens assembly (201), **characterized in** comprising:

a plurality of lens elements (211, 212) arranged in sequence along an optical axis (Z1); and an adjustable aperture group (220) disposed on an object side of the lens elements (211, 212), wherein the adjustable aperture group (220) comprises a plurality of rotatable light blocking sheets (230a), which are arranged around the optical axis (Z1) and form an adjustable light-through hole (234), each of the rotatable light blocking sheets (230a) comprises an image-side surface (231a) and an object-side surface (232a), the image-side surface (231a) faces the lens elements (211, 212), and the object-side surface (232a) is disposed opposite to the image-side surface (231a); wherein the adjustable aperture group (220) further comprises an anti-bending sheet (270a), which is coupled to one of the rotatable light blocking sheets (230a), and the anti-bending sheet (270a) is located farther from the optical axis (Z1) than the rotatable light blocking sheets (230a) located therefrom.

14. The imaging lens assembly (201) of claim 13, wherein in a direction parallel to the optical axis (Z1), a thickness of the anti-bending sheet (270a) is defined as S, a thickness of the one of the rotatable light blocking sheets (230a) from the object-side surface (232a) to the image-side surface (231a) is defined as T, and the following condition is satisfied:

$$0.23 \leq T/S \leq 0.94.$$

15. The imaging lens assembly (201) of any of claims 13-14, wherein the anti-bending sheet (270a) comprises a protrusion structure (278a), which protrudes in a direction away from the one of the rotatable light blocking sheets (230a).

16. The imaging lens assembly (201) of any of claims 13-15, wherein the image-side surface (231a) and the object-side surface (232a) of each of the rotatable light blocking sheets (230a) are made of different materials.

17. The imaging lens assembly (101) of any of claims 13-16, wherein at least one of the rotatable light blocking sheets (130a) comprises, in order from an image side to an object side:

a first light blocking layer (141a); a substrate (143a); and a second light blocking layer (142a); wherein a side of the substrate (143a) close to the optical axis (Z1) is located farther away from the optical axis (Z1) than the first light blocking layer (141a) and the second light blocking layer (142a) located therefrom.

18. The imaging lens assembly (101) of any of claims 13-17, wherein at least one of the rotatable light blocking sheets (130d) further comprises a coating layer (137d), and at least a portion of the coating layer (137d) is disposed on the side of the substrate (143d) close to the optical axis (Z1).

19. An imaging lens assembly (201), **characterized in** comprising:

a plurality of lens elements (211, 212) arranged in sequence along an optical axis (Z1); and an adjustable aperture group (220) disposed on an object side of the lens elements (211, 212), wherein the adjustable aperture group (220) comprises a plurality of rotatable light blocking sheets (250b, 260b), which are arranged around the optical axis (Z1) and form an adjustable light-through hole (234), each of the rotatable light blocking sheets (250b, 260b) comprises an image-side surface (251b, 261b) and an object-side surface (252b, 262b), the image-side surface (251b, 261b) faces the lens elements (211, 212), and the object-side surface (252b, 262b) is disposed opposite to the image-side surface (251b, 261b);
wherein the rotatable light blocking sheets (250b, 260b) comprise:

a first rotatable light blocking sheet (260b); and
a second rotatable light blocking sheet (250b) partially overlapped with the first rotatable light blocking sheet (260b) in a direction parallel to the optical axis (Z1) and located closer to the lens elements (211, 212) than the first rotatable light blocking sheet (260b) located thereto;

wherein in the direction parallel to the optical axis (Z1), a thickness of the first rotatable light blocking sheet (260b) from the object-side surface (262b) to the image-side surface (261b) is defined as Ti, a thickness of the second rotatable light blocking sheet (250b) from the object-side surface (252b) to the image-side surface (251b) is defined as Tii, and the following condition is satisfied:

$$0.23 \leq Ti/Tii \leq 0.95.$$

20. The imaging lens assembly (101) of claim 19, wherein the image-side surface (251b, 261b) and the object-side surface (252b, 262b) of each of the rotatable light blocking sheets (250b, 260b) are made of different materials.

21. The imaging lens assembly (101) of any of claims 19-20, wherein at least one of the rotatable light blocking sheets (130a) comprises, in order from an image side to an object side:

a first light blocking layer (141a);
a substrate (143a); and
a second light blocking layer (142a);
wherein a side of the substrate (143a) close to the optical axis (Z1) is located farther away from the optical axis (Z1) than the first light blocking layer (141a) and the second light blocking layer (142a) located therefrom.

22. The imaging lens assembly (101) of any of claims 19-21, wherein at least one of the rotatable light blocking sheets (130d) further comprises a coating layer (137d), and at least a portion of the coating layer (137d) is disposed on the side of the substrate (143d) close to the optical axis (Z1).

23. An imaging lens assembly (101), **characterized in** comprising:

a plurality of lens elements (111, 112) arranged in sequence along an optical axis (Z1); and
an adjustable aperture group (120) disposed on an object side of the lens elements (111, 112), wherein the adjustable aperture group (120) comprises a plurality of rotatable light blocking sheets (130b), which are arranged around the optical axis (Z1) and form an adjustable light-through hole (134), each of the rotatable light blocking sheets (130b) comprises an image-side surface (131b) and an object-side surface (132b), the image-side surface (131b) faces the lens elements (111, 112), and the object-side surface (132b) is disposed opposite to the image-side surface (131b);
wherein the image-side surface (131b) of at least one of the rotatable light blocking sheets (130b) comprises a tapered surface (135b), which is disposed on a side of the image-side surface (131b) close to the optical axis (Z1), and the tapered surface (135b) gradually approaches the object-side surface (132b) along a direction close to the optical axis (Z1);
wherein on a cross section parallel to the optical axis (Z1), the tapered surface (135b) is in an arc shape.

24. The imaging lens assembly (101) of claim 23, wherein the at least one of the rotatable light blocking sheets (130d) comprises, in order from an image side to an object side:

a first light blocking layer (141d) forming the image-side surface (131d);
a substrate (143d); and
a second light blocking layer (142d) forming the object-side surface (132d);

wherein a side of the substrate (143d) close to the optical axis (Z1) is located farther away from the optical axis (Z1) than the first light blocking layer (141d) and the second light blocking layer (142d) located therefrom;

wherein the first light blocking layer (141d) is located from the side of the substrate (143d) close to the optical axis (Z1) towards the second light blocking layer (142d) along the direction close to the optical axis (Z1) to form the tapered surface (135d).

25. The imaging lens assembly (101) of any of claims 23-24, wherein the at least one of the rotatable light blocking sheets (130d) further comprises a coating layer (137d), which is disposed on a side of the at least one of the rotatable light blocking sheets (130d) close to the optical axis (Z1), and the coating layer (137d) forms the tapered surface (135d).

26. An imaging lens assembly (101), **characterized in** comprising:

a plurality of lens elements (111, 112) arranged in sequence along an optical axis (Z1); and an adjustable aperture group (120) disposed on an object side of the lens elements (111, 112), wherein the adjustable aperture group (120) comprises a plurality of rotatable light blocking sheets (130f), which are arranged around the optical axis (Z1) and form an adjustable light-through hole (134), each of the rotatable light blocking sheets (130f) comprises an image-side surface (131f) and an object-side surface (132f), the image-side surface (131f) faces the lens elements (111, 112), and the object-side surface (132f) is disposed opposite to the image-side surface (131f);

wherein on a side of one of the rotatable light blocking sheets (130f) close to the optical axis (Z1), a thickness of the rotatable light blocking sheet is tapered along a direction close to the optical axis (Z1);

wherein the one of the rotatable light blocking sheets (130f) further comprises a coating layer (137f), which is disposed on the side of the rotatable light blocking sheet close to the optical axis (Z1), and the coating layer (137f) forms a tapered surface (135f).

27. The imaging lens assembly (101) of claim 26, wherein each of the rotatable light blocking sheets (130f) comprises, in order from an image side to an object side:

a first light blocking layer (141f) forming the image-side surface (131f);
a substrate (143f); and

a second light blocking layer (142f) forming the object-side surface (132f);

wherein a side of the substrate (143f) close to the optical axis (Z1) is located farther away from the optical axis (Z1) than the first light blocking layer (141f) and the second light blocking layer (142f) located therefrom.

28. The imaging lens assembly (101) of any of claims 26-27, wherein one of the first light blocking layer (141f) and the second light blocking layer (142f) is located from the side of the substrate (143f) close to the optical axis (Z1) towards the other one of the first light blocking layer (141f) and the second light blocking layer (142f) along the direction close to the optical axis (Z1).

29. The imaging lens assembly (101) of any of claims 26-28, wherein the tapered surface (135f) is disposed on the object-side surface (132f).

30. The imaging lens assembly (101) of any of claims 26-29, wherein the image-side surface (131f) and the object-side surface (132f) of each of the rotatable light blocking sheets (130f) have different glossiness.

31. The imaging lens assembly (101) of any of claims 26-30, further comprising:

a lens barrel (117) surrounding the optical axis (Z1), wherein the lens elements (111, 112) and the adjustable aperture group (120) are disposed at the lens barrel (117);

wherein one of the lens elements (111, 112) is a first lens element (111), which is located closer to the adjustable aperture group (120) than the other of the lens elements (111, 112) located thereto, and the first lens element (111) is more convex on the object side than the lens barrel (117) thereon.

32. A camera module (100), **characterized in** comprising:
the imaging lens assembly (101) of any of claims 26-31.

33. An electronic device (300), **characterized in** comprising:
the camera module (100) of claim 32.

Fig. 1A

Z1

111

123

120

122

117

Fig. 1B

Z1

122

120

123

134
130
132
133

124

125

126

111

117

Fig. 1C

130a

132a

133a

131A

Fig. 1D

Fig. 1E

Fig. 1F

Fig. 1G

EP 4 718 127 A2

Fig. 1H

Fig. 1I

EP 4 718 127 A2

EP 4 718 127 A2

130d

131d

137d

132d

133d

135d

Fig. 1J

Fig. 1K

Fig. 1L

EP 4 718 127 A2

142e
143e
141e

132e

130e

133e
135e

137e  131e

T

111

Fig. 1M

Fig. 1N

Fig. 10

Fig. 1P

EP 4 718 127 A2

Fig. 1Q

Fig. 2A

Fig. 2B

Fig. 2C

Fig. 2D

EP 4 718 127 A2

Fig. 2E

EP 4 718 127 A2

Fig. 2F

Fig. 2G

Fig. 3A

Fig. 3B

Fig. 4

Fig. 5